# EUROPÄISCHE PATENTSCHRIFT

(11) **EP 3 827 533 B1**
(45) Veröffentlichungstag und Bekanntmachung des Hinweises auf die Patenterteilung: **19.03.2025**
(21) Anmeldenummer: 19769210.6
(22) Anmeldetag: 01.07.2019
(51) Int. Cl.: H04J 3/06, H04L 12/40, G06F 1/04, G05B 19/414

(54) **SYSTEM MIT EINEM TEILNEHMER EINES DATENNETZES UND ENTSPRECHENDER TEILNEHMER**
SYSTEM WITH NODE IN A DATA NETWORK AND CORRESPONDING NODE
SYSTEM AVEC UN NOEUD DANS UN RESEAU DE DONNÉES ET NOEUD CORRESPONDANT

(30) Priorität: 26.07.2018 DE 102018005892
(43) Veröffentlichungstag der Anmeldung: 02.06.2021
(73) Patentinhaber: WAGO Verwaltungsgesellschaft mbH, 32423 Minden (DE)
(72) Erfinder: JEROLM, Daniel, 49152 Bad Essen (DE)
(74) Vertreter: FDST Patentanwälte
(86) Internationale Anmeldenummer: PCT/IB2019/055555
(87) Internationale Veröffentlichungsnummer: WO 2020/021360

(56) Entgegenhaltungen:
- EP-A2- 0 622 712
- EP-A2- 1 653 651
- US-A1- 2014 281 656
- AWEYA JAMES: "Implementing Synchronous Ethernet in Telecommunication Systems", IEEE COMMUNICATIONS SURVEYS & TUTORIALS, IEEE, USA, vol. 16, no. 2, 1 April 2014 (2014-04-01), pages 1080 - 1113, XP011547644, DOI: 10.1109/SURV.2013.103113.00260
- CHIP WEBB ANUE SYSTEMS ET AL: "A Layered Model for Error Sources in Boundary Clocks with Physical Layer Assist Part 1;WD23", ITU-T DRAFT ; STUDY PERIOD 2009-2012, INTERNATIONAL TELECOMMUNICATION UNION, GENEVA ; CH, vol. 13/15, 12 September 2011 (2011-09-12), pages 1 - 10, XP044041418

## Beschreibung

Die Erfindung betrifft ein System mit einem Teilnehmer eines drahtgebundenen Datennetzes sowie einen entsprechenden Teilnehmer, insbesondere einen Teilnehmer eines lokalen Bussystems.

Aus der EP 1 368 728 B1 ist ein synchrones, getaktetes Kommunikationssystem mit Relativuhr und ein Verfahren zum Aufbau eines solchen Systems bekannt. Um den taktsynchronen Datenaustausch zu gewährleisten, erfolgt eine permanente Resynchronisation der Teilnehmer während des laufenden Betriebs.

Die Dauer eines Kommunikationstakts beträgt zwischen 10 µs und 10 ms.

Aus der US 2012/0008727 A1 ist eine Schaltung zur Taktrückgewinnung bekannt. Die Taktrückgewinnung umfasst Datenübertragungsgeschwindigkeiten zwischen 1 bis 30 Gbps oder höher. Eine Taktrückgewinnung ist ebenfalls aus "HFTA-07.0: Precision Reference Clock Usage in Clock and Data Recovery Circuits", www.maximintegrated.com, 13. März 2003 bekannt.

Aus der DE 10 2012 108 696 A1 ist ein Datenbusteilnehmer mit einer Datenbusschnittstelle bekannt, die - einen Downstream-Datenbuseingang zum Empfang von Daten von einem übergeordneten Datenbusteilnehmer und - einen Taktgeber zur Erzeugung eines internen Taktsignals für den Datenbusteilnehmer hat. Der Datenbusteilnehmer hat eine Synchronisationseinheit zur Synchronisation des Taktgebers auf das Taktsignal des übergeordneten Datenbusteilnehmers, wobei die Synchronisationseinheit zur Detektion von Transitionen in dem am Downstream-Datenbuseingang empfangenen Downstream-Datenstrom. Die Synchronisationseinheit ist zur Regelung der Frequenz des internen Taktsignals in Abhängigkeit der detektierten Transitionen und zur Einstellung einer definierten Phasenlage des internen Taktsignals zu den detektierten Transitionen eingerichtet.

In der US 2014/281656 A1 ist ein HPC-System beschrieben, bei welchem für jeden Prozessor Prozessortaktsignale erzeugt werden, so dass alle Prozessortaktsignale die gleiche Frequenz haben. Außerdem werden im Rahmen eines Startvorgangs alle Zeitstempelzähler der Prozessoren so eingestellt, dass sie identische Zeiten anzeigen. Jeder Blade des HPC-Systems bezieht ein wiederhergestelltes Taktsignal aus einem synchronen Kommunikationsnetz, mit dem der Blade verbunden ist. Das Blade erzeugt aus dem wiedergewonnenen Taktsignal einen Prozessortakt und stellt diesen den Prozessoren auf dem Blade zur Verfügung.

Die EP 1 653 651 A2 ist ein modulares numerisches Steuergerät mit Low-Jitter Synchronisation beschrieben, das einen Hauptrechner und wenigstens eine Reglereinheit umfasst, die, ausgehend vom Hauptrechner, mittels serieller Datenübertragungskanäle in Form einer Reihenschaltung miteinander verbunden sind. Die wenigstens eine Reglereinheit enthält eine erste Empfängereinheit, um einen aus Richtung des Hauptrechners eintreffenden seriellen Datenstrom zu empfangen und eine erste Sendeeinheit, um einen seriellen Datenstrom auszugeben. Darüber hinaus ist in der wenigstens einen Reglereinheit eine Taktrückgewinnungseinheit vorgesehen, die aus dem an der ersten Empfängereinheit ankommenden seriellen Datenstrom ein Synchrontaktsignal ableitet und der ersten Sendeeinheit zuführt, die es als Sendetaktsignal verwendet, so dass der an der ersten Empfängereinheit ankommende serielle Datenstrom und der von der ersten Sendeeinheit ausgegebene serielle Datenstrom phasenstarr miteinander gekoppelt sind.

In der Veröffentlichung J. Aweya "Implementing Synchronous Ethernet in Telecommunication Systems", IEEE Communications Surveys & Tutorials, IEEE; USA, Bd. 16, Nr. 2, 1. April 2024, Seiten 1080-1113, XP011547644 ist der Aufbau, die Funktion und die Implementierung eines Synchronen Ethernet (Sync-E) erläutert. Hierbei sind Beispiele für Sync-E-Knoten-Timing-Architekturen und einige Netzwerk Timing-Anwendungen und damit verbundene Probleme beschrieben.

Aufgabe der vorliegenden Erfindung ist es, ein möglichst verbessertes System mit einem Teilnehmer eines drahtgebundenen Datennetzes sowie einen möglichst verbesserten Teilnehmer anzugeben. Diese Aufgabe wird durch ein System mit den Merkmalen des Anspruchs 1 gelöst. Vorteilhafte Weiterbildungen sind Gegenstand von abhängigen Ansprüchen.

Demzufolge ist ein Teilnehmer eines drahtgebundenen Datennetzes vorgesehen. Das drahtgebundene Datennetz ist insbesondere ein lokales Bussystems. Ein drahtgebundenes Datennetz ermöglicht die Übertragung von Daten beispielweise über elektrisch und/oder optisch leitende Verbindungen. Ein lokales Bussystem kann mit einem übergeordneten Feldbussystem über einen Koppler verbunden sein.

Der Teilnehmer weist einen internen Taktgeber zur Erzeugung eines Taktgebersignals mit einer Taktgeberfrequenz für den Teilnehmer auf. Ein interner Taktgeber ist dabei im Sinne von mindestens einem internen Taktgeber zu verstehen, wobei der Teilnehmer eine Mehrzahl von Taktgebern aufweisen kann, die ein unterschiedliches Taktgebersignal und/oder eine unterschiedliche Taktgeberfrequenz erzeugen. Der interne Taktgeber ist im Teilnehmer selbst angeordnet. Beispielsweise ist der interne Taktgeber ein Bestandteil eines Schaltkreises des Teilnehmers. Das Taktgebersignal ist ein Signal das einen Takt an Schaltungsteilen des Teilnehmers bereitstellen kann. Das Taktgebersignal ist beispielweise ein digitales Rechtecksignal mit hoher Flankensteilheit und geringem Jitter.

Der Teilnehmer weist eine Empfangsschaltung zum Empfang eines seriellen Empfangs-Datenstroms auf. Eine Empfangsschaltung ist dabei im Sinne von mindestens einer Empfangsschaltung zu verstehen, beispielweise kann ein Teilnehmer mit zwei Busanschlüssen zumindest zwei Empfangsschaltungen erfordern. Entsprechend ist ein serieller Empfangs-Datenstrom dabei im Sinne von mindestens einem seriellen Empfangs-Datenstrom zu verstehen. Ein serieller Empfangs-Datenstrom ist Teil einer seriellen Datenübertragung. Mittels serieller Datenübertragung können digitale Daten autonom auf einem oder mehreren Leitungspaaren übertragen werden. Der serielle Empfangs-Datenstrom kann beispielweise als bit-serielle Datenübertragung erfolgen, wobei eine oder mehrere Leitungen parallel genutzt werden können. Zur Übertragung des seriellen Empfangs-Datenstroms können die Daten komplex moduliert werden, wobei die durch Modulation erzeugten Signale keine einzelnen Bits mehr kennen, z.B. QAM4 oder QAM64.

Der Teilnehmer weist eine Verarbeitungsschaltung zur Eingabe von parallelen Empfangsdaten und zur Ausgabe von parallelen Sendedaten auf. Eine Verarbeitungsschaltung ist dabei im Sinne von mindestens einer Verarbeitungsschaltung zu verstehen, beispielweise können zwei Empfangsschaltungen unterschiedlichen Verarbeitungsschaltungen zugeordnet sein. Vorteilhafterweise ist die Verarbeitungsschaltung zur Eingabe einer festen Anzahl von Bits als parallele Empfangsdaten, beispielsweise 8 Bits, ausgebildet. Gemäß einer vorteilhaften Weiterbildung ist die jeweilige Anzahl der parallelen Bits der parallelen Empfangsdaten und der parallelen Sendedaten gleich.

Der Teilnehmer weist eine Sendeschaltung zum Senden eines seriellen Sende-Datenstroms auf. Eine Sendeschaltung ist dabei im Sinne von mindestens einer Sendeschaltung zu verstehen, beispielweise kann der Teilnehmer zwei Busanschlüsse für die Übertragung von zwei unterschiedlichen weiteren Teilnehmern aufweisen, wobei jedem Busanschluss eine Sendeschaltung zugehörig sein kann. Entsprechend ist ein serieller Sende-Datenstrom dabei im Sinne von mindestens einem seriellen Sende-Datenstrom zu verstehen. Ein serieller Sende-Datenstrom ist Teil einer seriellen Datenübertragung. Mittels serieller Datenübertragung können digitale Daten autonom auf einem oder mehreren Leitungspaaren übertragen werden. Der serielle Sende-Datenstrom kann beispielweise als bit-serielle Datenübertragung erfolgen, wobei eine oder mehrere Leitungen parallel genutzt werden können. Zur Übertragung des seriellen Sende-Datenstroms können die Daten komplex moduliert werden, wobei die durch Modulation erzeugten Signale keine einzelnen Bits mehr kennen, z.B. QAM4 oder QAM64.

Gemäß einer vorteilhaften Weiterbildung weist die Empfangsschaltung einen Seriell-Parallel-Wandler zum Wandeln von seriellen Empfangsdaten des seriellen Empfangs-Datenstroms in die parallelen Empfangsdaten auf. Ein Seriell-Parallel-Wandler ist dabei im Sinne von mindestens einem Seriell-Parallel-Wandler zu verstehen, beispielweise können bei zwei Leitungspaaren der seriellen Übertragung zwei Seriell-Parallel-Wandler parallel die Daten wandeln. Ein Seriell-Parallel-Wandler weist vorteilhafterweise zumindest einen Eingang für die seriellen Empfangsdaten und parallele Ausgänge für die parallelen Empfangsdaten auf und ist zum Wandeln der seriellen Empfangsdaten in die parallelen Empfangsdaten ausgebildet. Beispielsweise weist der Seriell-Parallel-Wandler digitale Speicherzellen auf und ist als Register, insbesondere als Schieberegister ausgebildet.

Gemäß einer vorteilhaften Weiterbildung der Erfindung weist die Empfangsschaltung eine Synchronisationseinheit zur Synchronisation des internen Taktgebers auf die im seriellen Empfangs-Datenstrom enthaltene Datentaktfrequenz auf. Eine Synchronisationseinheit ist dabei im Sinne von mindestens einer Synchronisationseinheit zu verstehen. Die Synchronisationseinheit ist dabei vorzugsweise eine Schaltung. Die Synchronisationseinheit ist beispielweise auf einem Halbleiterchip integriert, beispielsweise zusammen mit zumindest Teilen des Taktgebers. Die Synchronisation weist beispielweise eine Frequenzsynchronisation auf, wobei die Taktgeberfrequenz des internen Taktgebers automatisch angepasst wird. Gemäß Weiterbildungen der Erfindung kann die Synchronisation eine oder mehrere zusätzliche weitere Synchronisationen, beispielweise eine Phasensynchronisation oder Amplitudensynchronisation umfassen. Dadurch, dass die Datentaktfrequenz im seriellen Empfangs-Datenstrom enthalten ist, kann diese beispielweise implizit als Information in Empfangs-Datenstrom existieren, beispielsweise ist die kleinste Periode zwischen zwei Transitionen ein Kehrwert der Datentaktfrequenz. Entsprechend ist für die Synchronisation kein explizit übertragener Frequenzwert erforderlich. Vorzugsweise ist die Synchronisationseinheit zur Detektion von Transitionen im empfangenen seriellen Empfangs-Datenstrom und zur Regelung der Taktgeberfrequenz des internen Taktgebers in Abhängigkeit von den detektierten Transitionen eingerichtet. Beispielweise sind Transitionen im bitseriellen Signal Signalflanken zwischen Low und High. Beispielsweise sind Transitionen im modulierten Datenstrom Übergänge zwischen Zuständen der Modulation. Beispielsweise gibt es bei QAM4 vier Zustände zwischen denen Transitionen detektiert werden können.

Gemäß einer vorteilhaften Weiterbildung der Erfindung weist die Sendeschaltung einen Parallel-Seriell-Wandler zum Wandeln der parallelen Sendedaten in serielle Sendedaten des Sende-Datenstroms auf. Ein Parallel-Seriell-Wandler ist dabei im Sinne von mindestens einem Parallel-Seriell-Wandler zu verstehen, beispielweise können für zwei Leitungspaare der seriellen Übertragung zwei Parallel-Seriell-Wandler parallel die Daten wandeln. Der Parallel-Seriell-Wandler weist vorteilhafterweise zumindest einen Ausgang für die seriellen Sendedaten und parallele Eingänge für die parallelen Sendedaten auf und ist zum Wandeln der parallelen Sendedaten in die seriellen Sendedaten ausgebildet. Beispielsweise weist der Parallel-Seriell-Wandler digitale Speicherzellen auf und ist als Register, insbesondere als Schieberegister ausgebildet.

Gemäß einer vorteilhaften Weiterbildung der Erfindung ist der interne Taktgeber zur Ausgabe eines vom Taktgebersignal abgeleiteten ersten Taktsignals an die Sendeschaltung eingerichtet, so dass das Wandeln der parallelen Sendedaten in serielle Sendedaten für den seriellen Sende-Datenstrom durch das erste Taktsignal getaktet ist. Gemäß einer vorteilhaften Weiterbildung der Erfindung weisen der interne Taktgeber einen Taktausgang zur Ausgabe des ersten Taktsignals und die Sendeschaltung einen Takteingang zur Eingabe des ersten Taktsignals auf.

Gemäß einer vorteilhaften Weiterbildung der Erfindung ist eine erste Taktfrequenz des ersten Taktsignals durch die Regelung gleich der im seriellen Empfangs-Datenstrom enthaltenen Datentaktfrequenz. Gemäß einer vorteilhaften Weiterbildung der Erfindung werden minimale Unterschiede zwischen einem Ist-Frequenzwert und einem Soll-Frequenzwert durch die Regelung zu Null geregelt.

Gemäß einer vorteilhaften Weiterbildung der Erfindung ist der Taktgeber zur Ausgabe eines vom Taktgebersignal abgeleiteten zweiten Taktsignals an die Verarbeitungsschaltung eingerichtet, so dass eine Verarbeitung der parallelen Empfangsdaten und/oder der parallelen Sendedaten durch das zweite Taktsignal getaktet ist. Dabei können das erste Taktsignal und das zweite Taktsignal unterschiedlich oder gleich sein. Zudem ist es in anderen Weiterbildungen der Erfindung möglich, dass der Taktgeber ein drittes Taktsignal oder weitere Taktsignale ausgibt. Gemäß einer vorteilhaften Weiterbildung der Erfindung weist die Verarbeitungsschaltung einen Takteingang zur Eingabe des zweiten Taktsignals auf.

Gemäß einer vorteilhaften Weiterbildung der Erfindung ist die Verarbeitungsschaltung für die Verarbeitung eingerichtet, die parallelen Empfangsdaten weiterzuleiten. Vorteilhafterweise erfolgt das Weiterleiten ohne Zwischenspeicherung ganzer Datenpakete. Vorzugsweise ist die Verarbeitungsschaltung eingerichtet, die parallelen Sendedaten basierend auf den parallelen Empfangsdaten an die Sendeschaltung nach einer vorgegebenen Anzahl von Takten des zweiten Taktsignals auszugeben. Die vorgegebene Anzahl von Takten ist vorzugsweise kleiner zwanzig Takte, beispielweise lediglich zwei Takte. Beispielsweise werden die parallelen Empfangsdaten im Sinne eines firstin-first-out durch den Teilnehmer mittels der Verarbeitungsschaltung verändert oder unverändert weitergeleitet. Beispielweise können aufeinander folgende Daten ein und desselben Datenpakets beim Weiterleiten durch den Teilnehmer zeitgleich empfangen und gesendet werden.

Gemäß einer vorteilhaften Weiterbildung der Erfindung ist die Verarbeitungsschaltung für die Verarbeitung zusätzlich eingerichtet, die parallelen Empfangsdaten zumindest teilweise in einem Speicherbereich für eine Auswertung zu speichern und/oder die parallelen Sendedaten zumindest teilweise aus einem Speicherbereich auszulesen, um die ausgelesenen parallelen Sendedaten an die Sendeschaltung auszugeben und/oder eine Anzahl von Bitwerten der parallelen Empfangsdaten zu ändern, um die parallelen Empfangsdaten mit der Änderung als parallele Sendedaten an die Sendeschaltung auszugeben. Ein Speicherbereich ist dabei im Sinne von mindestens einem Speicherbereich zu verstehen. Der Speicher ist vorteilhafterweise im Teilnehmer angeordnet oder zumindest durch den Teilnehmer zugreifbar.

Gemäß einer vorteilhaften Weiterbildung der Erfindung ist der Taktgeber eingerichtet, das zweite Taktsignal mit einer zweiten Taktfrequenz auszugeben. Die zweite Taktfrequenz ist durch die Regelung gleich oder ein ganzzahliges Vielfaches oder ein ganzzahliger Bruchteil der im seriellen Empfangs-Datenstrom enthaltenen Datentaktfrequenz.

Gemäß einer vorteilhaften Weiterbildung der Erfindung ist die Taktgeberfrequenz des Taktgebers durch die Regelung gleich oder ein ganzzahliger Bruchteil oder ein ganzzahliges Vielfaches der im seriellen Empfangs-Datenstrom enthaltenen Datentaktfrequenz.

Gemäß einer vorteilhaften Weiterbildung der Erfindung weist die Verarbeitungsschaltung einen Speicherbereich für eine Instruktionsliste auf. Eine Instruktionsliste ist dabei im Sinne von mindestens einer Instruktionsliste zu verstehen. Die Verarbeitungsschaltung ist eingerichtet, die Verarbeitung basierend auf in der Instruktionsliste enthaltene Instruktionen auszuführen. Die Verarbeitungsschaltung ist eingerichtet, ein Auslesen der Instruktionen aus der Instruktionsliste mittels des zweiten Taktsignals zu takten.

Gemäß einer vorteilhaften Weiterbildung der Erfindung weist der Taktgeber zumindest einen Quarzoszillator mit über Spannung trimmbarer Taktgeberfrequenz auf. Vorteilhafterweise ist der Quarzoszillator Bestandteil mindestens einer Phasenregelschleife.

Gemäß einer vorteilhaften Weiterbildung der Erfindung ist die Taktgeberfrequenz des Taktgebers nur innerhalb eines Bereichs von kleiner 1% der Taktgeberfrequenz, insbesondere kleiner 200 ppm der Taktgeberfrequenz einstellbar.

Gemäß einer vorteilhaften Weiterbildung der Erfindung weist die Empfangsschaltung einen Dekodierer zum Dekodieren der parallelen Empfangsdaten auf. Ein Dekodierer ist dabei im Sinne von mindestens einem Dekodierer zu verstehen. Vorteilhafterweise ist der Dekodierer durch das erste Taktsignal getaktet. Gemäß einer vorteilhaften Weiterbildung der Erfindung weist die Sendeschaltung einen Kodierer zum Kodieren der parallelen Sendedaten auf. Ein Kodierer ist dabei im Sinne von mindestens einem Kodierer zu verstehen. Vorteilhafterweise ist der Kodierer durch das erste Taktsignal getaktet.

Gemäß einer vorteilhaften Weiterbildung der Erfindung weist die Empfangsschaltung einen Descrambler zum Descrambeln der parallelen Empfangsdaten auf. Ein Descrambler ist dabei im Sinne von mindestens einem Descrambler zu verstehen. Vorzugsweise ist der Descrambler durch das erste Taktsignal getaktet. Gemäß einer vorteilhaften Weiterbildung der Erfindung weist die Sendeschaltung einen Scrambler zum Scrambeln der parallelen Sendedaten auf. Ein Scrambler ist dabei im Sinne von mindestens einem Scrambler zu verstehen. Vorteilhafterweise ist der Scrambler durch das erste Taktsignal getaktet.

Gemäß einer vorteilhaften Weiterbildung der Erfindung ist die Verarbeitungsschaltung eingerichtet, nach einer vorgegebenen Anzahl von Takten des zweiten Taktsignals nach Eingabe der parallelen Empfangsdaten die parallelen Sendedaten auszugeben.

Erfindungsgemäß weist der Teilnehmer einen Uhrenschaltkreis zur Ausgabe einer Uhrzeit auf. Ein Uhrenschaltkreis ist dabei im Sinne von mindestens einem Uhrenschaltkreis zu verstehen. Entsprechend ist eine Uhrzeit im Sinne von mindestens einer Uhrzeit zu verstehen.

Gemäß einer vorteilhaften Weiterbildung der Erfindung ist ein Uhrentakt des Uhrenschaltkreises vom Taktgebersignal mit der Taktgeberfrequenz abgeleitet. Der Uhrenschaltkreis ist vorteilhafterweise mit einem Taktausgang des Taktgebers verbunden. Vorteilhafterweise ist der Uhrentakt durch die Regelung gleich oder ein Bruchteil oder ein Vielfaches der im seriellen Empfangs-Datenstrom enthaltenen Datentaktfrequenz. Grundsätzlich ist es möglich, dass der Uhrentakt ein nicht-ganzzahliger Bruchteil oder ein nicht-ganzzahliges Vielfaches der Datentaktfrequenz ist. Bevorzugt ist jedoch der Uhrentakt durch die Regelung ein ganzzahliger Bruchteil oder ein ganzzahliges Vielfaches der im seriellen Empfangs-Datenstrom enthaltenen Datentaktfrequenz.

Gemäß einer vorteilhaften Weiterbildung der Erfindung ist die Verarbeitungsschaltung zur Synchronisation der Uhrzeit eingerichtet. Dabei ist die Verarbeitungsschaltung eingerichtet, einen Zeitwert aus den parallelen Empfangsdaten auszuwerten und basierend auf dem Zeitwert die Uhrzeit des Uhrenschaltkreises einzustellen. Die Uhrzeit des Uhrenschaltkreises kann zudem auf einer bekannten oder ermittelten Anzahl von Takten des Taktgebers basieren, die benötigt werden, um die parallelen Empfangsdaten zu empfangen und/oder auszuwerten und/oder die Uhrzeit einzustellen. Beispielweise lässt sich die Uhrzeit des Uhrenschaltkreises des Teilnehmers auf eine Referenz-Uhrzeit eines weiteren Teilnehmers synchronisieren, wobei von dem weiteren Teilnehmer der Zeitwert empfangen wird.

Gemäß einer vorteilhaften Weiterbildung der Erfindung ist die Verarbeitungsschaltung eingerichtet, ein Zeitinkrementwert aus den parallelen Empfangsdaten auszuwerten und basierend auf dem Zeitinkrementwert ein Uhrzeitinkrement des Uhrenschaltkreises einzustellen. Beispielweise kann durch das Uhrzeitinkrement die Geschwindigkeit der Uhr festgelegt werden.

Gemäß einer vorteilhaften Weiterbildung der Erfindung ist der Uhrenschaltkreis derart ausgebildet, dass die Uhrzeit nicht durch einen Uhrzeitregler des Uhrenschaltkreises geregelt ist.

Gemäß einer vorteilhaften Weiterbildung der Erfindung ist die Verarbeitungsschaltung eingerichtet, einen aktuellen Zeitwert und/oder einen aktuellen Zeitinkrementwert aus dem Uhrenschaltkreis zu bestimmen und in die parallelen Sendedaten zu schreiben. Zum Schreiben des aktuellen Zeitwerts ist die Verarbeitungsschaltung vorzugsweise eingerichtet, den empfangenen Zeitwert durch Inkrementierung von Bits des empfangenen Zeitwerts zu erzeugen. Dabei erfolgt die Inkrementierung der Bits beim Durchleiten des empfangenen Zeitwertes und Senden als aktueller Zeitwert. Durch das Durchleiten erfolgen das Empfangen des Zeitwertes und das Senden des aktuellen Zeitwertes teilweise gleichzeitig. Damit ist es vorzugsweise nicht notwendig, zunächst den Zeitwert vollständig zu empfangen und zwischen zu speichern, um den aktuellen Zeitwert zu generieren und zu senden. Vorzugsweise ist der aktuelle Zeitwert die Summe aus dem empfangenen Zeitwert und einem zeitlichen Delta einer bekannten oder bestimmten Übertragungsverzögerung durch den Teilnehmer. Entsprechend kann sich ein nachfolgender Teilnehmer, der den aktuellen Zeitwert empfängt, auf die Uhrzeit des vorhergehenden Teilnehmers mittels des aktuellen Zeitwerts aufsynchronisieren.

Der Gegenstand der Erfindung ist nicht auf die zuvor erläuterten Weiterbildungen beschränkt. So können die erläuterten Merkmale oder Teilmerkmale auch in anderer Zusammenstellung kombiniert werden. Mögliche Ausgestaltungen der Erfindung sind in der folgenden Figurenbeschreibung erläutert. Dabei zeigen:
- Figur 1: eine schematische Darstellung eines Teilnehmers eines drahtgebundenen Netzwerks eines Ausführungsbeispiels;
- Figur 2: eine schematische Darstellung eines Teilnehmers eines drahtgebundenen Netzwerks eines anderen Ausführungsbeispiels;
- Figur 2a: eine schematische Darstellung von Speicherbereichen eines Speichers;
- Figur 3: eine schematische Darstellung eines Ausführungsbeispiels eines Systems mit einem lokalen Bus und einem übergeordneten Bus; und
- Figur 3a: eine schematische Darstellung eines Datenpakets.

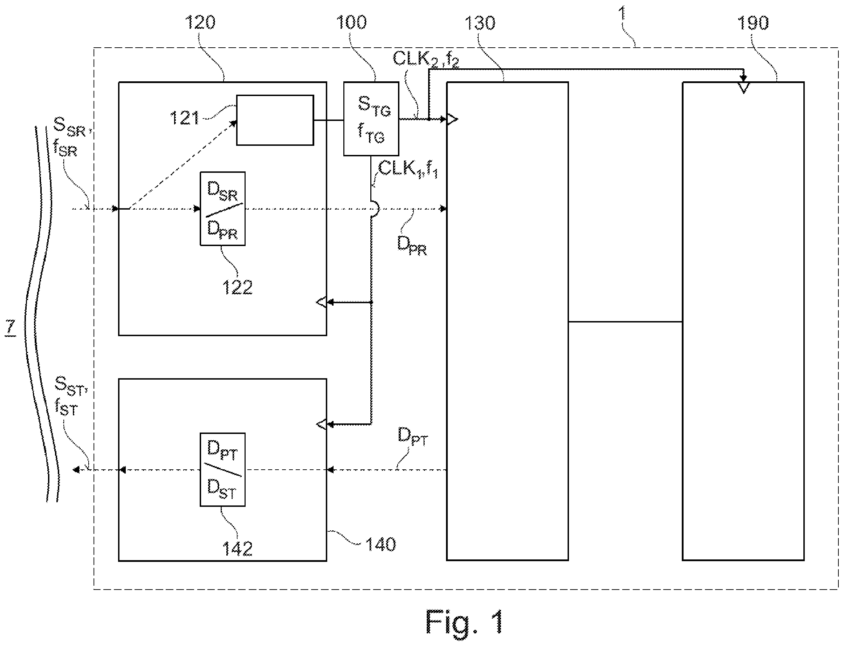

In Figur 1 ist ein Teilnehmer 1 eines drahtgebundenen Datennetzes 7 schematisch dargestellt. Im Ausführungsbespiel der Figur 1 ist das Datennetz 7 zur seriellen Datenübertragung ausgebildet. Bei einer seriellen Datenübertragung werden Daten autonom auf einer Leitung oder einer Anzahl von Leitungspaaren übertragen. Bei einer seriellen Übertragung muss man keine Laufzeitunterschiede verschiedener Leitungen berücksichtigen, so dass höhere Übertragungsfrequenzen ermöglicht werden. Die serielle Datenübertragung kann in einem einfachen Fall als bit-serielle Datenübertragung ausgebildet sein, wobei bei der seriellen Datenübertragungen mehrere Leitungen parallel genutzt werden können, wie z.B. bei Gigabit-Ethernet oder HDMI. Ebenfalls können zur seriellen Datenübertragung komplexe Modulationen verwendet werden, wie z.B. QAM16, QAM64 oder dergleichen, die keine einzelnen Bits mehr kennen (z.B. PCI-Express, USB 3.X usw.). Je nach serieller Datenübertragung sind unterschiedliche serielle Schnittstellen, Stecker, Spannungen, Modulationen, Protokolle und Softwareschnittstellen definiert.

Das Ausführungsbeispiel in Figur 1 zeigt in einer stark vereinfachten BlockDarstellung den Teilnehmer 1 des drahtgebundenen Datennetzes 7. Die Erfindung ist nicht auf genau einen Teilnehmer beschränkt, üblicherweise können in einem drahtgebundenen Datennetz 7 eine Vielzahl von Teilnehmern miteinander verbunden sein.

Der Teilnehmer 1 weist einen internen Taktgeber 100 zur Erzeugung eines Taktgebersignals S_{TG} mit einer Taktgeberfrequenz f_{TG} für den Teilnehmer 1 auf. Im Ausführungsbeispiel der Figur 1 ist die Taktgeberfrequenz f_{TG} durch eine Synchronisationseinheit 121 innerhalb eines Frequenzbereiches einstellbar. Hierzu ist der interne Taktgeber 100 mit der Synchronisationseinheit 121 verbunden.

Der Teilnehmer 1 des Ausführungsbeispiels in der Figur 1 weist eine Empfangsschaltung 120 zum Empfang eines seriellen Empfangs-Datenstroms S_{SR} vom drahtgebundenen Datennetz 7 auf. Der serielle Empfangs-Datenstrom S_{SR} besteht im einfachsten Fall in einer Abfolge von Nullen und Einsen auf einer oder mehreren seriellen Leitungen. Ebenfalls ist es im Ausführungsbeispiel der Figur 1 möglich, Modulationsverfahren zur seriellen Übertragung des seriellen Empfangs-Datenstroms S_{SR} zu verwenden (in Figur 1 nicht dargestellt).

Der Teilnehmer 1 des Ausführungsbeispiels der Figur 1 weist zudem eine Verarbeitungsschaltung 130 zur Eingabe von parallelen Empfangsdaten D_{PR} und zur Ausgabe von parallelen Sendedaten D_{PT} auf. Die Verarbeitungsschaltung 130 ist im Ausführungsbeispiel der Figur 1 durch eine digitale Logik gebildet. Es ist möglich, die digitale Logik durch einen programmierbaren Prozessor zu bilden, bevorzugt ist die digitale Logik der Verarbeitungsschaltung 130 durch hartverdrahtete Logikelemente gebildet, so dass die Verarbeitungsschaltung 130 selbst keine Software zur Verarbeitung aufweist. Die Verarbeitungsschaltung 130 ist mit der Empfangsschaltung 120 verbunden, so dass die parallelen Empfangsdaten D_{PR} von der Empfangsschaltung 120 zur Verarbeitungsschaltung 130 gelangen können.

Der Teilnehmer 1 des Ausführungsbeispiels der Figur 1 weist zudem eine Sendeschaltung 140 zum Senden eines seriellen Sende-Datenstroms S_{ST} auf dem drahtgebundenen Datennetz 7 auf. Der serielle Sende-Datenstrom S_{ST} besteht im einfachsten Fall in einer Abfolge von Nullen und Einsen auf einer oder mehrerer serieller Leitungen des drahtgebundenen Datennetzes 7. Ebenfalls ist es im Ausführungsbeispiel der Figur 1 möglich, Modulationsverfahren zur seriellen Übertragung des seriellen Sende-Datenstroms S_{ST} zu verwenden (in Figur 1 nicht dargestellt). Die Verarbeitungsschaltung 130 ist mit der Sendeschaltung 140 verbunden, so dass die parallelen Sendedaten D_{PT} von der Verarbeitungsschaltung 130 zur Sendeschaltung 140 gelangen können.

Die Empfangsschaltung 120 des Teilnehmers 1 des Ausführungsbeispiels der Figur 1 weist einen Seriell-Parallel-Wandler 122 zum Wandeln von seriellen Empfangsdaten D_{SR} in die parallelen Empfangsdaten D_{PR} auf. Die seriellen Empfangsdaten D_{SR} sind dabei im seriellen Empfangs-Datenstroms S_{SR} auf dem drahtgebundenen Datennetz 7 enthalten. In einer besonders einfachen Ausführungsform des Seriell-Parallel-Wandlers 122 ist dieser als Schieberegister ausgebildet, wobei die seriellen Empfangsdaten D_{SR} am seriellen Eingang des Schieberegisters anliegen und die die parallelen Empfangsdaten D_{PR} an den parallelen Ausgängen des Schieberegister ausgegeben werden (in Figur 1 nicht dargestellt).

Die Empfangsschaltung 120 des Teilnehmers 1 des Ausführungsbeispiels der Figur 1 weist zudem die Synchronisationseinheit 121 zur Synchronisation des internen Taktgebers 100 auf. Die Synchronisationseinheit 121 ist dabei zur Synchronisation des internen Taktgebers 100, insbesondere dessen Taktgeberfrequenz f_{TG} auf die im seriellen Empfangs-Datenstrom S_{SR} enthaltene Datentaktfrequenz f_{SR} ausgebildet. Die Datentaktfrequenz ist dabei von dem Abstand von Transitionen zwischen aufeinanderfolgender unterschiedlicher Werte, z.B. Low und High des seriellen Empfangs-Datenstrom S_{SR} abhängig. Die im seriellen Empfangs-Datenstrom S_{SR} enthaltene Datentaktfrequenz f_{SR} entspricht dabei einer Taktfrequenz mit der ein über das drahtgebundene Datennetz 7 verbundener Sender (in Figur 1 nicht dargestellt) den Datenstrom S_{SR} taktet. Der Teilnehmer 1 im Ausführungsbeispiel der Figur 1 ist eingerichtet, mittels der Datentaktfrequenz f_{SR} sich auf eine Taktfrequenz des über das drahtgebundene Datennetz 7 verbundenen Senders zu synchronisieren, so dass die Taktgeberfrequenz f_{TG} der Datentaktfrequenz f_{SR} präzise und verzögerungsarm folgt. Dabei ist die Synchronisationseinheit 121 zur Detektion der Transitionen im empfangenen seriellen Empfangs-Datenstrom S_{SR} und zur Regelung der Taktgeberfrequenz f_{TG} des internen Taktgebers 100 in Abhängigkeit von den detektierten Transitionen eingerichtet. Zusätzlich zu den im Ausführungsbeispiel der Figur 1 dargestellten Seriell-Parallel-Wandler 122 und Synchronisationseinheit 121 weist die Empfangsschaltung 120 mehrere weitere Teilschaltungen für die Funktion des Empfangs des seriellen Datenstroms S_{SR} und weiterer Funktionen auf, die zum vereinfachten Verständnis in Figur 1 nicht gezeigt sind.

Die Sendeschaltung 140 des Teilnehmers 1 des Ausführungsbeispiels der Figur 1 weist einen Parallel-Seriell-Wandler 142 zum Wandeln der parallelen Sendedaten D_{PR} in serielle Sendedaten D_{ST} des Sende-Datenstroms S_{ST} auf. Die seriellen Sendedaten D_{ST} werden im seriellen Sende-Datenstroms S_{ST} an einen anderen Teilnehmer (in Figur 1 nicht dargestellt) im drahtgebundenen Datennetz 7 übertragen. Die Sendeschaltung 140 des Teilnehmers 1 des Ausführungsbeispiels der Figur 1 ist dabei stark vereinfacht dargestellt und weist für die Funktionen der Sendeschaltung 140 vorzugsweise weitere Teilschaltungen, wie beispielweise Codierschaltung, Modulationsschaltung, Verstärkerschaltung oder dergleichen auf, die für ein einfaches Verständnis in Figur 1 nicht dargestellt sind. Die Sendeschaltung 140 und die Empfangsschaltung 120 können mit unterschiedlichen weiteren Teilnehmern verbunden sein. Auch ist es möglich, dass die Sendeschaltung 140 und die Empfangsschaltung 120 beispielweise für eine Duplexverbindung mit demselben Teilnehmer oder beispielweise über einen Switch mit mehreren weiteren Teilnehmern verbunden sind.

Im Ausführungsbeispiel der Figur 1 ist der interne Taktgeber 100 zur Ausgabe eines vom Taktgebersignal S_{TG} abgeleiteten ersten Taktsignals CLK₁ eingerichtet. Zur Ableitung des ersten Taktsignals CLK₁ vom Taktgebersignal S_{TG} wird die Taktgeberfrequenz f_{TG} des Taktgebersignals S_{TG} beispielsweise ganzzahlig multipliziert oder geteilt. Auch ist es möglich, zur Ableitung die Amplitude oder eine Steilheit von Taktflanken anzupassen. Im Ausführungsbeispiel der Figur 1 ist eine erste Taktfrequenz f₁ des ersten Taktsignals CLK₁ durch die Regelung der Synchronisationseinheit 121 gleich der im seriellen Empfangs-Datenstrom S_{SR} enthaltenen Datentaktfrequenz f_{SR}. Der Taktgeber 100 ist mit dem Parallel-Seriell-Wandler 142 der Sendeschaltung 140 zur Ausgabe des ersten Taktsignals CLK₁ an den Parallel-Seriell-Wandler 142 verbunden, so dass das Wandeln der parallelen Sendedaten D_{PR} in serielle Sendedaten D_{ST} für den seriellen Sende-Datenstrom S_{ST} durch das erste Taktsignal CLK₁ getaktet ist. Durch die Taktung mittels des ersten Taktsignals CLK₁ ist im Rahmen der Regelung der Synchronisationseinheit 121 eine Sende-Datentaktfrequenz f_{ST} im Sendedatenstrom S_{ST} gleich der ersten Frequenz f₁ und gleich der Datentaktfrequenz f_{SR} des Empfangsdatenstroms S_{SR} geregelt.

Der Taktgeber 100 ist im Ausführungsbeispiel der Figur 1 zur Ausgabe eines vom Taktgebersignal S_{TG} abgeleiteten zweiten Taktsignals CLK₂ an die Verarbeitungsschaltung 130 eingerichtet. Zur Ableitung des zweiten Taktsignals CLK₂ vom Taktgebersignal S_{TG} wird die Taktgeberfrequenz f_{TG} des Taktgebersignals S_{TG} beispielsweise ganzzahlig multipliziert oder geteilt. Auch ist es möglich, zur Ableitung die Amplitude oder eine Steilheit von Taktflanken anzupassen. In einer einfachen Ausführungsform entspricht eine zweite Frequenz f₂ des zweiten Taktsignals CLK₂ der ersten Frequenz f₁ des ersten Taktsignals CLK₁. Es ist möglich, dass das zweite Taktsignal CLK₂ dem ersten Taktsignal CLK₁ entspricht. Alternativ kann die Verarbeitungsschaltung 130 beispielsweise höher getaktet werden, so dass mehr Rechenressource für die Verarbeitung zur Verfügung steht. Beispielweise ist die zweite Frequenz f₂ ein ganzzahliges oder nicht-ganzzahliges Vielfaches der Taktgeberfrequenz f_{TG}. Dabei ist zumindest die Verarbeitung der parallelen Empfangsdaten D_{PR} und/oder der parallelen Sendedaten D_{PT} durch das zweite Taktsignal CLK₂ getaktet.

In einem einfach ausgebildeten Teilnehmer 1 ist die Verarbeitungsschaltung 130 ausreichend die Funktionen des Teilnehmers 1 zu gewährleisten. Beispielsweise ist die Verarbeitungsschaltung 130 ausreichend, um digitale Eingangsdaten an digitalen Eingangsanschlüssen einzulesen oder digitale Ausgangsdaten an Ausgangsanschlüssen auszugeben (in Figur 1 nicht dargestellt). Soll der Teilnehmer 1 komplexere Funktionen ausführen, so weist der Teilnehmer 1 eine programmierbare Recheneinheit 190, beispielsweise einen Prozessor, wie eine CPU oder einen Mikrocontroller auf. Die programmierbare Recheneinheit 190 ist mit der Verarbeitungsschaltung 130 zum Austausch von Daten verbunden. Beispielweise können die parallelen Empfangsdaten D_{PR} und/oder die parallelen Sendedaten D_{PT} zwischen der Verarbeitungsschaltung 130 und der programmierbaren Recheneinheit 190 ausgetauscht werden. Die programmierbare Recheneinheit 190 kann beispielweise zur Umrechnung von Messwerten oder Steuerwerten für die parallelen Empfangsdaten D_{PR} und/oder die parallelen Sendedaten D_{PT} verwendet werden. Im Ausführungsbeispiel der Figur 1 ist die programmierbare Recheneinheit 190 durch das zweite Taktsignal CLK₂ getaktet, so dass die Taktung der programmierbaren Recheneinheit 190 ebenfalls von der im seriellen Empfangs-Datenstrom S_{SR} enthaltenen Datentaktfrequenz f_{SR} abhängt.

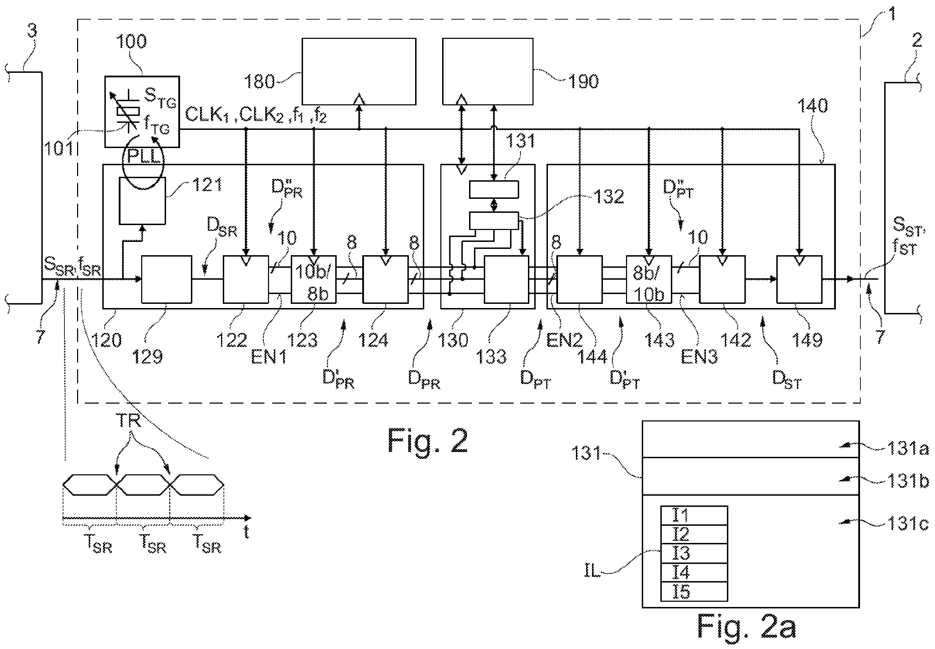

In Figur 2 ist ein weiteres Ausführungsbeispiel mit einem Teilnehmer 1 in einem drahtgebundenen Datennetz 7 und zwei weitere Teilnehmer 2, 3 schematisch dargestellt. Im in Figur 2 dargestellten Ausführungsbeispiel wird auf den Teilnehmer 1 in der Mitte zwischen den weiteren Teilnehmern 2 und 3 Bezug genommen, wobei ein serieller Empfangs-Datenstrom S_{SR} vom weiteren Teilnehmer 3 gesendet und vom Teilnehmer 1 empfangen wird. Der Teilnehmer 1 sendet einen Sende-Datenstrom S_{ST} an den Teilnehmer 2, wobei der Sende-Datenstrom S_{ST} vom weiteren Teilnehmer 2 empfangen wird. Im Ausführungsbeispiel der Figur 2 werden in dem Datenstrom seriell übertragene Daten in Datenpaketen durch eine Mehrzahl kommunikationsbereiter Teilnehmer geleitet, wobei ein Datenpaket nur einmal erzeugt wird und beispielweise durch jeden Teilnehmer geändert werden kann. Ein Datenpaket kann auch als Telegramm bezeichnet werden.

Der Teilnehmer 1 im Ausführungsbeispiel der Figur 2 weist eine Empfangsschaltung 120 und eine Sendeschaltung 140 und einen Taktgeber 100 und eine Verarbeitungsschaltung 130 auf. Optional weist der Teilnehmer 1 im Ausführungsbeispiel der Figur 2 noch einen Uhrenschaltkreis 180 und eine programmierbare Recheneinheit 190 auf.

Die Empfangsschaltung 120 des Teilnehmers 1 ist zum Empfang des seriellen Empfangs-Datenstroms S_{SR} eingerichtet. Die Empfangsschaltung 120 weist eine Eingangsschaltung 129 auf, die beispielsweise einen Verstärker oder dergleichen aufweisen kann. Die Eingangsschaltung 129 ist zur Ausgabe serieller Empfangsdaten D_{SR} ausgebildet. Die Empfangsschaltung 120 weist einen Seriell-Parallel-Wandler 122 zum Wandeln der seriellen Empfangsdaten D_{SR} des seriellen Empfangs-Datenstroms S_{SR} in die parallelen Empfangsdaten D_{PR}" auf. Je nach Ausbildung der parallelen Empfangsdaten D_{PR}" weist die Empfangsschaltung 120 weitere Teilschaltungen auf. Im Ausführungsbeispiel der Figur 2 sind die Daten zudem kodiert und gescrambled (engl. scramble - dt. verwürfeln, verschlüsseln).

Im Ausführungsbeispiel der Figur 2 weist die Empfangsschaltung 120 einen Dekodierer 123 zum Dekodieren der parallelen Empfangsdaten D_{PR}" auf. Dabei gibt der Dekodierer 123 dekodierte parallele Empfangsdaten D_{PR}' aus. Ein Eingang des Dekodierers 123 ist mit einem Ausgang des Seriell-Parallel-Wandlers 122 verbunden. Ein Ausgang des Dekodierers 123 ist mit einem Eingang eines Descramblers 124 verbunden. Der Dekodierer 123 ist im Ausführungsbeispiel der Figur 2 durch ein erstes Taktsignal CLK₁ getaktet. Im Ausführungsbeispiel der Figur 2 ist der Dekodierer 123 als 10b8b Dekodierer ausgebildet. Alternativ können für andere Kodierungen, wie beispielweise 64b66b-Code oder Manchester andere Dekodierer verwendet werden. Durch den 8b10b-Code wird die maximale Länge gleicher Bit (engl. - maximum run length) durch entsprechende Auswahl der Codewörter bei reiner Datenübertragung auf fünf beschränkt, d. h. spätestens nach fünf Takten wechselt der Pegel bei einer Transition. Dies ermöglicht eine einfache Taktrückgewinnung aus dem seriellen Empfangs-Datenstrom S_{SR}.

Im Ausführungsbeispiel der Figur 2 weist die Empfangsschaltung 120 einen Descrambler (dt. Entwürfler) 124 zum Descrambeln der parallelen Empfangsdaten D_{PR}' auf. Ein Eingang des Descramblers 124 ist mit dem Ausgang des Dekodierers 123 verbunden. Ein Ausgang des Descramblers 124 ist mit einem Eingang einer Verarbeitungsschaltung 130 verbunden. Der Descrambler 124 gibt descrambelte parallele Empfangsdaten D_{PR} aus. Der Descrambler 124 ist durch das erste Taktsignal CLK₁ getaktet.

Im Ausführungsbeispiel der Figur 2 ist eine Taktrückgewinnung vorgesehen. Das Ziel der Taktrückgewinnung ist es, aus einem empfangenen seriellen Empfangs-Datenstrom S_{SR} den Sendetakt des Senders, also des Teilnehmers 3 zu bestimmen und damit u.a. das zeitgenaue Abtasten des seriellen Empfangs-Datenstrom S_{SR} zu ermöglichen und den in Richtung des weiteren Teilnehmers 2 gesendeten Sende-Datenstrom S_{ST} zeitlich richtig auszurichten (synchronisieren). Die Taktrückgewinnung wird auf Empfängerseite des Teilnehmers 1 verwendet, um periodische Abtastzeitpunkte des empfangenen seriellen Empfangs-Datenstrom S_{SR} zu ermitteln. Durch diese zeitlich genaue Ausrichtung kann der serielle Empfangs-Datenstrom S_{SR} möglichst exakt ausgewertet werden, entsprechend sind Bitfehler selten. Durch die Taktrückgewinnung kann auf eine parallele Taktübertragung mittels eigenem Takt-Übertragungskanal zur Synchronisation verzichtet werden.

Um aus dem seriellen Empfangs-Datenstrom S_{SR} den Sendetakt mit der Datentaktfrequenz f_{SR} gewinnen zu können, muss der serielle Empfangs-Datenstrom S_{SR} bei z.B. bitserieller Übertragung hinreichend viele Signalflanken aufweisen, so dass lange Folgen von '1' oder '0' ohne Transitionen, d.h. ohne Flanken in der Übertragung zu vermeiden sind. Dies wird im Ausführungsbeispiel der Figur 2 u.a. durch eine 8b10b-Kodierung erreicht. In Figur 2 ist schematisch der serielle Empfangs-Datenstrom S_{SR} mit Transitionen TR und zu den Transitionen zugehörige Periode T_{SR} über die Zeit t dargestellt. Die Datentaktfrequenz f_{SR} entspricht dem Kehrwert der Periode T_{SR}.

Die Empfangsschaltung 120 weist eine Synchronisationseinheit 121 zur Synchronisation des internen Taktgebers 100 auf die im seriellen Empfangs-Datenstrom S_{SR} enthaltene Datentaktfrequenz f_{SR} auf. Die Synchronisationseinheit 121 bildet zusammen mit dem internen Taktgeber 100 eine Phasenregelschleife PLL, so dass die Frequenz f_{TG} des internen Taktgebers 100 basierend auf der im seriellen Empfangs-Datenstrom S_{SR} enthaltenen Datentaktfrequenz f_{SR} geregelt ist. Oder mit anderen Worten ist die Synchronisationseinheit 121 zur Detektion der Transitionen TR im empfangenen seriellen Empfangs-Datenstrom S_{SR} und zur Regelung der Taktgeberfrequenz f_{TG} des internen Taktgebers 100 in Abhängigkeit von den detektierten Transitionen TR eingerichtet. Beispielweise entspricht die Frequenz f_{TG} des internen Taktgebers 100 der Datentaktfrequenz f_{SR} oder die Frequenz f_{TG} des internen Taktgebers 100 ist ein ganzzahliger Bruchteil der Datentaktfrequenz f_{SR} oder die Frequenz f_{TG} des internen Taktgebers 100 ist ein ganzzahliges Vielfaches der Datentaktfrequenz f_{SR}.

Der interne Taktgeber 100 im Ausführungsbeispiel der Figur 2 dient zur Erzeugung eines Taktgebersignals S_{TG} mit der Taktgeberfrequenz f_{TG} für den Teilnehmer 1 selbst. Im Ausführungsbeispiel der Figur 2 wird der gesamte Teilnehmer 1 basierend auf dem Taktgebersignals S_{TG} getaktet, so dass kein weiterer Taktgeber für Schaltungsteile des Teilnehmers 1 vorgesehen ist. Der Taktgeber 100 weist einen Quarzoszillator 101 mit über Spannung trimmbarer Taktgeberfrequenz f_{TG} auf. Derartige Quarzoszillatoren werden auch als VCXO (engl. Voltage Controlled (X)crystal Oscillator), TCVCXO (engl. Temperature Compensated Voltage Controlled (X)Crystal Oscillator) oder OCVCXO (Oven Controlled Voltage Controlled (X)Crystal Oscillator) bezeichnet und stehen u.a. für temperaturkompensierte bzw. beheizte einstellbare Quarz-Oszillatoren.

Vorteilhafterweise ist die Taktgeberfrequenz f_{TG} des Taktgebers 100 nur innerhalb eines Bereichs von kleiner 1% der Taktgeberfrequenz f_{TG} einstellbar. Vorzugsweise ist die Taktgeberfrequenz nur in der Größenordnung von 100 ppm veränderbar. Im Ausführungsbeispiel der Figur 2 ist der Quarzoszillator 101 Bestandteil einer Phasenregelschleife PLL (engl. - Phase Locked Loop), wobei die Phasenregelschleife PLL zumindest Teile des Taktgebers 100 und der Synchronisationseinheit 121 umfasst.

Der interne Taktgeber 100 ist zur Ausgabe eines vom Taktgebersignal S_{TG} abgeleiteten ersten Taktsignals CLK₁ an die Sendeschaltung 140 eingerichtet. Das erste Taktsignal CLK₁ weist die erste Frequenz f₁ auf. Zum Ableiten des ersten Taktsignals CLK₁ weist der interne Taktgeber 100 beispielweise eine weitere Phasenregelschleife (nicht dargestellt) auf, mittels derer die Taktgeberfrequenz f_{TG} ganzzahlig multipliziert wird, um die erste Taktfrequenz f₁ zu erhalten. Im Ausführungsbeispiel der Figur 2 ist der interne Taktgeber 100 ausgebildet, die erste Taktfrequenz f₁ des ersten Taktsignals CLK₁ derart zu regeln, dass die erste Taktfrequenz f₁ gleich der im seriellen Empfangs-Datenstrom S_{SR} enthaltenen Datentaktfrequenz f_{SR} ist.

Der Taktgeber 100 in Figur 2 ist zudem zur Ausgabe eines vom Taktgebersignal S_{TG} abgeleiteten zweiten Taktsignals CLK₂ zumindest an die Verarbeitungsschaltung 130 eingerichtet, so dass eine Verarbeitung der parallelen Empfangsdaten D_{PR} und/oder der parallelen Sendedaten D_{PT} durch das zweite Taktsignal CLK₂ getaktet ist. Der Taktgeber 100 ist eingerichtet, das zweite Taktsignal CLK₂ mit einer zweiten Taktfrequenz f₂ auszugeben, wobei die zweite Taktfrequenz f₂ durch die Regelung beispielweise ein ganzzahliges Vielfaches der im seriellen Empfangs-Datenstrom S_{SR} enthaltenen Datentaktfrequenz f_{SR} oder ein ganzzahliger Bruchteil der im seriellen Empfangs-Datenstrom S_{SR} enthaltenen Datentaktfrequenz f_{SR} ist. Im dargestellten Ausführungsbeispiel der Figur 2 ist das zweite Taktsignal CLK₂ beispielsweise gleich dem ersten Taktsignal CLK₁, somit ist auch die erste Frequenz f₁ gleich der zweiten Frequenz f₂.

Im Ausführungsbeispiel der Figur 2 ist eine Verarbeitungsschaltung 130 gezeigt zur Eingabe der parallelen Empfangsdaten D_{PR} und zur Ausgabe der parallelen Sendedaten D_{PT}. Entsprechend ist die Verarbeitungsschaltung 130 mit der Empfangsschaltung 120 und der Sendeschaltung 140 verbunden. Die Verarbeitungsschaltung 130 ist für die Verarbeitung eingerichtet, die parallelen Empfangsdaten D_{PR} weiterzuleiten, um die parallelen Sendedaten D_{PR} basierend auf den parallelen Empfangsdaten D_{PR} an die Sendeschaltung 140 nach einer vorgegebenen Anzahl von Takten des zweiten Taktsignals CLK₂ auszugeben. Damit ist die Anzahl der Takte des zweiten Taktsignals CLK₂ für alle parallelen Empfangsdaten D_{PR} immer gleich und damit deterministisch verzögert. Da alle Teil-Schaltungen 129, 122, 123, 124, 133, 144, 143, 142, 149 in der Übertragungskette zwischen Eingang des seriellen Empfangs-Datenstroms S_{SR} und seriellen Sende-Datenstroms S_{ST} je keine oder eine durch das erste Taktsignals CLK₁ und/oder das zweite Taktsignal CLK₂ bedingte Verzögerung verursachen, ist die Gesamtverzögerung für den Datenstrom S_{SR}, S_{ST} durch den Teilnehmer 1 vorgegeben und konstant und somit deterministisch.

Im Ausführungsbeispiel der Figur 2 weist die Verarbeitungsschaltung 130 eine Manipulationsschaltung 133 zur bitgranularen Änderung einzelner oder aller Bits der parallelen Empfangsdaten D_{PR} auf. Die geänderten parallelen Empfangsdaten D_{PR} sind die parallelen Sendedaten D_{PT}. Zur Steuerung der Änderung weist die Verarbeitungsschaltung 130 eine digitale Logik 132 auf. Die digitale Logik 132 ist mit der Manipulationsschaltung 133 und mit einem Speicher 131 verbunden. Durch die Manipulationsschaltung 133 können die parallelen Empfangsdaten D_{PR} geändert, jedoch nicht zwischengespeichert werden, so dass, wenn eingangsseitig die parallelen Empfangsdaten D_{PR} anliegen, zeitgleich die parallelen Sendedaten D_{PT} ausgegeben werden. Das Freigabesignal EN2 für die parallelen Sendedaten D_{PT} ist jedoch um die vorgegebene Anzahl Takte des zweiten Taktsignals CLK₂ gegenüber der Eingabe der parallelen Empfangsdaten D_{PR} verzögert. Beispielsweise ist durch das Freigabesignal EN2 die Weitergabe der parallelen Sendedaten D_{PT} um zwei Takte des zweiten Taktsignals CLK₂ konstant verzögert.

Eine Verarbeitung der parallelen Empfangsdaten D_{PR} kann darin bestehen, dass eine Bitoperation auf den empfangenen parallelen Empfangsdaten D_{PR} ausgeführt wird. In diesem Fall kann auch davon gesprochen werden, dass die Verarbeitung bitgranular geschieht. Die Bitoperationen, die durchgeführt werden können, basieren beispielsweise auf einem reduzierten Instruktionssatz den der Teilnehmer 1 ausführen kann, beispielsweise "SKIP", "MOVE", "NEGATION", "INCREMENT", "AND" und "OR" oder einer Kombination daraus. Die Verarbeitungsschaltung 130 weist einen Speicherbereich 131c im Speicher 130 für eine Instruktionsliste IL auf. Der Speicher 131 und der Speicherbereich 131c sind im Ausführungsbeispiel der Figur 2a schematisch dargestellt. Die Verarbeitungsschaltung 130 ist eingerichtet, die Verarbeitung basierend auf in der Instruktionsliste IL enthaltene Instruktionen I1, I2, I3, I4, I5 auszuführen, wobei ein Auslesen der Instruktionen I1, I2, I3, I4, I5 aus der Instruktionsliste IL mittels des zweiten Taktsignals CLK₂ getaktet ist.

Welche Bitoperationen in welcher Reihenfolge ausgeführt werden, ist in dem Teilnehmer 1 mit Hilfe der Instruktionsliste IL hinterlegt. Eine Instruktionsliste IL kann dabei dem jeweiligen Teilnehmer 1 in einem ersten Datenpaket zuvor zugesandt werden und stellt die Programmierung des Teilnehmers 1 dar. Diese Instruktionsliste IL enthält für jeden Teil, z.B. ein Symbol von 8 Bit, der parallelen Empfangsdaten D_{PR} oder für jedes Bit der parallelen Empfangsdaten D_{PR} zumindest eine Instruktion I1, I2, I3, I4, I5, d.h. eine Operation die mit dem entsprechenden Bit durchgeführt werden soll. Dabei kann für jedes Symbol eine feste Anzahl oder eine vorherbestimmte Anzahl von Instruktionen I1, I2, I3, I4, I5 in der Instruktionsliste IL vorhanden sein. D.h. der Teilnehmer 1 führt in der Zeit, die ihm zur Verarbeitung zur Verfügung steht, eine gewisse Anzahl von Instruktionen I1, I2, I3, I4, I5 pro Symbol aus. Soll der Teilnehmer 1 beispielsweise mit dem Bit keine Verarbeitung durchführen, so kann die entsprechende Instruktionsliste IL für das entsprechende Bit leer sein oder eine "SKIP" Instruktion aufweisen. Die Instruktionsliste IL kann auch die Anzahl der Wiederholungen für eine bestimmte Instruktion I1, I2, I3, I4, I5 aufweisen. Beispielsweise kann die Instruktionsliste IL eine "SKIP" Instruktion beinhalten, mit dem Hinweis diese zweimal zu wiederholen. In diesem Fall werden dann die nächsten zwei Bit nicht verarbeitet, sondern übersprungen. Auch für die Instruktionen "MOVE", "NEGATION", "INCREMENT", "AND" und "OR" können Parameter vorgegeben sein.

Die Instruktionen I1, I2, I3, I4, I5 steuern entsprechend die Manipulationsschaltung 133, die z.B. eine Anzahl von Bits in einem Symbol der parallelen Empfangsdaten D_{PR} setzt und/oder löscht. Ebenfalls ist es möglich, dass eine Anzahl von Bits der parallelen Empfangsdaten D_{PR} inkrementiert wird, um auf einen Wert in den parallelen Empfangsdaten D_{PR} einen weiteren Wert zu addieren. Dabei ist es nützlich ein Überlaufbit aus den parallelen Empfangsdaten D_{PR} bei der Inkrementierung zwischen zu speichern. Ebenfalls ist es möglich, durch die Manipulationsschaltung 133 das Setzen und/oder Löschen und/oder Inkrementieren mit einander zu kombinieren.

Die Verarbeitungsschaltung 130 kann beispielweise mittels der Instruktionen I1, I2, I3, I4, I5 eine Reihe weiterer Verarbeitungen durchführen. Beispielweise ist die Verarbeitungsschaltung 130 für die Verarbeitung eingerichtet, die parallelen Empfangsdaten D_{PR} in einem Speicherbereich 131a für eine Auswertung zu speichern. Alternativ oder in Kombination ist es möglich, die parallelen Sendedaten D_{PT} aus einem Speicherbereich 131b zumindest teilweise auszulesen, um die ausgelesenen Daten als parallele Sendedaten D_{PT} an die Sendeschaltung 140 auszugeben. Alternativ oder in Kombination ist es möglich, eine Anzahl von Bitwerten der parallelen Empfangsdaten D_{PR} zu ändern, um die parallelen Empfangsdaten D_{PR} mit der Änderung als parallele Sendedaten D_{PT} an die Sendeschaltung 140 auszugeben.

Im Ausführungsbeispiel der Figur 2 ist die Verarbeitungsschaltung 130 durch das zweite Taktsignal CLK₂ getaktet. Die Verarbeitungsschaltung 130 ist eingerichtet, nach einer vorgegebenen Anzahl von Takten des zweiten Taktsignals CLK₂ nach Eingabe der parallelen Empfangsdaten D_{PR} die parallelen Sendedaten D_{PT} auszugeben. Die Verzögerung durch die Verarbeitungsschaltung 130 ist damit zeitlich deterministisch und unabhängig von einem Programmablauf in einer Recheneinheit. Dennoch ist es möglich, während der vorgegebenen Anzahl von Takten eine Verarbeitung der Daten durchzuführen und auf einen empfangenen Wert z.B. einen weiteren Wert zu addieren oder von diesem zu subtrahieren, ohne die parallelen Empfangsdaten D_{PR} in einem Speicher vor der Verarbeitung zwischenspeichern zu müssen.

Der Teilnehmer im Ausführungsbeispiel der Figur 2 weist die Sendeschaltung 140 zum Senden eines seriellen Sende-Datenstroms S_{ST} auf. Die Sendeschaltung 140 weist einen Scrambler (dt. Verwürfler) 144 zum Scrambeln der parallelen Sendedaten D_{PT} auf. Der Scrambler 144 ist durch das erste Taktsignal CLK₁ getaktet. Der Scrambler 144 verwendet linear rückgekoppelte Schieberegister oder fixe Tabellen, um die parallelen Sendedaten D_{PT} mittels eines relativ einfachen Algorithmus umkehrbar umzustellen. Die Umkehrung erfolgt dabei durch den Descrambler 124. Die Sendeschaltung 140 weist zudem einen Kodierer 143 zum Kodieren der parallelen Sendedaten D_{PT}' und Ausgabe kodierter paralleler Sendedaten D_{PT}" auf. Der Kodierer 143 ist beispielsweise ein 8b10b-Kodierer. Der Kodierer 143 ist durch das erste Taktsignal CLK₁ getaktet. Die Sendeschaltung 140 weist einen Parallel-Seriell-Wandler 142 zum Wandeln der vom Kodierer 143 ausgegebenen parallelen Sendedaten D_{PT}" in serielle Sendedaten D_{ST} auf, wobei die Sendedaten D_{ST} in den Sende-Datenstrom S_{ST} eingefügt werden. Die Sendeschaltung 140 weist zudem eine Ausgangsschaltung 149 auf, die ebenfalls mittels des ersten Taktsignals CLK₁ getaktet ist. Die Ausgangsschaltung 149 weist beispielweise ein in der Übertragungskette letztes Register auf, dass durch das erste Taktsignal CLK₁ getaktet ist, so dass die seriellen Sendedaten D_{ST} mit exakt gleich geregelter Frequenz ausgegeben werden, wie die Datentaktfrequenz f_{SR} des Empfangs-Datenstroms S_{SR}.

Im Ausführungsbeispiel der Figur 2 weist der Teilnehmer 1 zudem eine programmierbare Recheneinheit 190 auf, um ein teilnehmerspezifisches Programm abzuarbeiten. Die Programme in der programmierbaren Recheneinheit 190 laufen dabei taktsynchron mit der Verarbeitung der parallelen Empfangsdaten D_{PR} und der parallelen Sendedaten D_{PT}. Dabei wird die programmierbare Recheneinheit 190 durch das zweite Taktsignal CLK₂ getaktet. Entsprechend ist auch die Verarbeitung in höheren Protokollschichten idealerweise deterministisch.

Der Teilnehmer 1 weist im Ausführungsbeispiel der Figur 2 zudem einen Uhrenschaltkreis 180 auf. Der Uhrenschaltkreis 180 wird im Folgenden auch als Uhr 180 bezeichnet. Der Uhrenschaltkreis 180 dient der zeitlichen Steuerung und/oder Erfassung. Der Uhrenschaltkreis 180 ist beispielweise Bestandteil eines verteilten Uhrensystems. Beispielweise kann mittels des Uhrenschaltkreises 180 ein Einlesezeitpunkt von z.B. Sensordaten bestimmt werden oder eine Ausgabe von Steuerdaten, z.B. zur Steuerung eines Aktors kann basierend auf einer Uhrzeit des Uhrenschaltkreises 180 auf einen bestimmten Zeitpunkt festgelegt werden. Dies ist beispielweise dann interessant, wenn mehrerer Teilnehmer 1, 2, 3 einen Prozess steuern und zu einem vorbestimmten gemeinsamen Zeitpunkt ein Prozessabbild erfassen sollen. Im Ausführungsbeispiel der Figur 2 ist der Uhrenschaltkreis 180 ebenfalls durch das erste Taktsignal CLK₁ oder das zweite Taktsignal CLK₂ getaktet, so dass der Uhrenschaltkreis 180 abhängig von der Datentaktfrequenz f_{SR} schneller oder langsamer läuft. Jedoch läuft die Uhr 180 durch die Regelung der Regelschleife PLL entsprechend zu einem vorhergehenden Teilnehmer 3 von dem der serielle Empfangs-Datenstrom S_{SR} durch den Teilnehmer 1 empfangen wird.

Untersuchungen der Anmelderin haben gezeigt, dass durch die Ausbildung des Teilnehmers 1 im Ausführungsbeispiel der Figur 2 mit Taktrückgewinnung und getaktete Ausgabe der seriellen Sendedaten D_{ST} mit derselben Frequenz, sowie der insbesondere Uhr-gesteuerten Verarbeitung mit derselben Frequenz Teilnehmer 1, 2 ausgebildet werden können, die zueinander zeitlich hoch präzise arbeiten können.

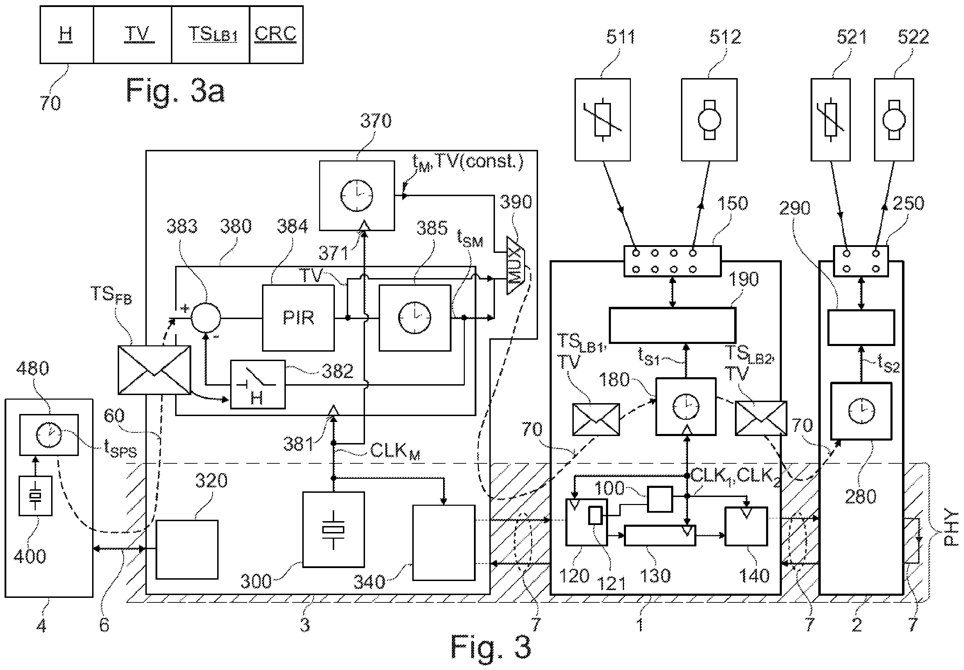

In Figur 3 ist ein System mit Teilnehmern 1, 2, 3, die über einem lokalen Bus 7 verbunden sind, und mit Teilnehmern 3, 4, die über einen übergeordneten Bus 6 miteinander verbunden sind, schematisch dargestellt. Der übergeordnete Bus 6 kann als Feldbus ausgebildet sein. Der Teilnehmer 3, der sowohl mit dem Feldbus 6 als auch mit dem Lokalbus 7 verbunden ist, wirkt als Gateway und kann auch als Koppler oder Kopfstation oder Lokalbusmaster bezeichnet werden.

Durch das System gemäß dem Ausführungsbeispiel der Figur 3 soll erreicht werden, dass untergeordnete Uhren 180, 280 auf eine übergeordnete Uhr 370, 380 synchronisiert werden, um eine verteilte, synchronisierte Uhrzeit im System mit räumlich getrennten Teilnehmern 1, 2, 3 bereitzustellen. Dies kann auch als verteilte Uhr, engl. Distributed Clock bezeichnet werden.

Mit dem Koppler 3 sind über den Lokalbus 7 ein erster Teilnehmer 1 und ein zweiter Teilnehmer 2 verbunden. Der erste Teilnehmer 1 weist einen internen Taktgeber 100 zur Erzeugung eines Taktgebersignals mit einer Taktgeberfrequenz für den ersten Teilnehmer 1 auf. Ebenfalls weist der erste Teilnehmer 1 eine Empfangsschaltung 120 zum Empfang eines seriellen Empfangs-Datenstroms und eine Sendeschaltung 140 zum Senden eines seriellen Sende-Datenstroms auf. Die Empfangsschaltung 120 weist einen Seriell-Parallel-Wandler (in Figur 3 nicht dargestellt) zum Wandeln von seriellen Empfangsdaten des seriellen Empfangs-Datenstroms in parallele Empfangsdaten auf. Die Sendeschaltung 140 weist einen Parallel-Seriell-Wandler (in Figur 3 nicht dargestellt) zum Wandeln der parallelen Sendedaten in serielle Sendedaten des Sende-Datenstroms auf.

Entsprechend weist auch der zweite Teilnehmer 2 des Lokalbusses 7 einen Taktgeber, eine Empfangsschaltung und eine Sendeschaltung auf. Diese sind in Figur 3 jedoch nicht dargestellt.

Zur Kommunikation über den Lokalbus 7 weist der Koppler 3 eine lokalbusseitige Sende-Empfangs-Schaltung 340 und zur Kommunikation über den Feldbus 6 eine feldbusseitige Sende-Empfangs-Schaltung 320 auf. Im Ausführungsbeispiel der Figur 3 kann die übergeordnete Uhr 380 innerhalb des Lokalbussystems auf eine weitere, ihr übergeordnete Uhr 480 synchronisiert werden.

Die Uhr 380 des Kopplers 3 wird auf die Uhr 480 einer übergeordneten Steuerung 480, z.B. einer SPS (Speicher Programmierbare Steuerung), mittels einer Regelung synchronisiert. Im Ausführungsbeispiel der Figur 3 weist der Koppler 3 zur Uhrensynchronisation eine Regelschleife auf. In dieser Regelschleife ist die lokale Uhr 385 vorgesehen, die basierend auf der Stellgröße der Geschwindigkeit die Uhrzeit t_{SM} ausgibt. Die Ist-Zeit t_{SM} wird zum Zeitpunkt des Empfangs der Nachricht 60 mittels des Halteglieds 382 erfasst und zwischengespeichert. Die Sollzeit TS_{FB} ist in der Nachricht 60 enthalten, durch das Differenzglied 383 wird ein lokaler Fehler aus Ist-Zeit und Soll-Zeit TS_{FB} bestimmt und dem Eingang des PI-Reglers 384 eingegeben.

Es wird ein Referenztakt verwendet, um zyklisch den lokalen Fehler zu bestimmen, der dann mit einem geeigneten Regler 384 eliminiert werden soll. Dazu kann der Regler 384 als Stellgröße die Geschwindigkeit der zu synchronisierenden Uhr 380 entsprechend verändern, um den lokalen Fehler zu Null zu regeln. Der Referenztakt wird durch das Ereignis "Empfang einer bestimmten Kommunikationsnachricht" 60 realisiert. Die Nachricht 60 enthält beispielweise den Soll-Wert TS_{FB} für die Zeit, welcher zu Berechnung des lokalen Fehlers genutzt wird.

Zur Regelung wird im Ausführungsbeispiel der Figur 3 im Koppler 3 ein PI-Regler 384 verwendet, welcher die Geschwindigkeit der Uhrenschaltung 385 so verändert, dass im eingeregelten Zustand die Uhr 380 des Kopplers 3 genauso schnell läuft, wie die übergeordnete Uhr 480 der SPS 4, also der Drift-Fehler zu Null geregelt ist, und dass die Uhr 380 des Kopplers 3 die gleiche Uhrzeit t_{SM} liefert, wie die übergeordnete Uhr 480 der SPS 4, also der Offset-Fehler zu Null geregelt ist. Eine Besonderheit stellt dabei der Drift-Fehler dar. Dieser Drift-Fehler bezeichnet den Geschwindigkeitsunterschied zwischen den zu synchronisierenden Uhren 380 und 480. Der Geschwindigkeitsfehler beider Uhren 380, 480 ist auf die leicht unterschiedlichen Frequenzen der in jedem Teilnehmer 3, 4 eingesetzten Taktgeber 300, 400 zurückzuführen, wobei Quarzoszillatoren oder MEMS oder andere Oszillatoren der Taktgeber 300, 400 leicht unterschiedliche Frequenzen aufweisen.

Die Drift stellt die erste Ableitung des lokalen Fehlers dar. D.h., wenn der lokale Fehler kontinuierlich wächst, dann ist die Drift nicht Null. Ist der lokale Fehler konstant, dann ist die Drift Null und es liegt nur ein Offset-Fehler vor. Der Offsetfehler ist ebenfalls darauf zurückzuführen, dass selbst zwei exakt gleich schnell laufende Uhren mindestens einmal synchronisiert werden müssen. Die Stellgröße, welcher der PI-Regler 384 des Kopplers 3 im Ausführungsbeispiel der Figur 3 beeinflusst, ist die Geschwindigkeit der Uhrenschaltung 385. Ein Offset-Fehler kann dadurch mit einem künstlichen "Drift-Fehler" ausgeregelt werden. D.h. der Regler 384 ändert für eine begrenzte Zeit die Geschwindigkeit der Uhrenschaltung 385, um einen Offset-Fehler auszuregeln.

In der Regelschleife wird eine Mehrzahl von Abtastzyklen verwendet, um die Synchronisation auf die übergeordnete Uhr 480 herzustellen. Der PI-Regler 384 wird träge ausgelegt, da der lokale Fehler häufig mit verschiedenen Störgrößen belegt ist, wie beispielweise Rauschen, sporadische Ausreißer und Diskretisierungsfehler. Durch die träge Auslegung des PI-Reglers 384 wirken sich die Störgrößen nur begrenzt auf die zu synchronisierende Uhrzeit t_{SM} aus. Mit langsamer Regelung dauert das Aufsynchronisieren (Einrasten) entsprechend lange, so dass die Störgrößen sich nur sehr begrenzt auswirken.

Der Einrastvorgang kann verkürzt werden, indem der PI-Regler 384 häufiger abgetastet wird, was jedoch einen erhöhten Kommunikationsaufwand bedeutet, indem mehr Nachrichten 60 über den Bus 6 übertragen werden müssen. Die Nachricht 60 kann auch als Synchronisierungstelegramm bezeichnet werden. Zudem ist die Belastung der CPU höher, wenn die Regelschleife in einem Softwareprogramm implementiert ist. Alternativ könnte der PI-Regler 384 auch "schneller" dimensioniert werden, wodurch sich jedoch die Störgrößen stärker auf den Restfehler bei der Synchronisation auswirken.

Bei Einsatz eines PI-Reglers 384 ergibt sich für den geschlossenen Regelkreis als Übertragungsfunktion ein PT2-Verhalten oder ein Übertragungsverhalten höherer Ordnung. Es kann sich ein schwingungsfähiges System ergeben, d.h. die Sprungantwort resultiert nicht in einem lokalen Fehler der sich asymptotisch der Null annähert, sondern die Sprungantwort gleicht einer bedämpften Schwingung, deren Amplitude sich asymptotisch der Null nähert. Zur Bestimmung, ob die Uhr 380 aufsynchronisiert ist oder nicht, wird der lokale Fehler daraufhin geprüft, ob dieser innerhalb eines Fensters um die Null liegt. Bei einer Sprungantwort, welche einer bedämpften Schwingung gleicht, kann dieses Fenster während des Snychronisationsvorgangs mehrmals betreten und wieder verlassen werden, bevor die Amplitude so klein geworden ist, dass der Restfehler dauerhaft innerhalb des Fensters liegt. Entsprechend ist der Synchronisationsvorgang dann abgeschlossen, wenn der Restfehler eine bestimmte Zeit das Fenster nicht verlassen hat.

Im Ausführungsbeispiel der Figur 3 liegt ein Taktsignal CLK_{M} des Taktgebers 300 des Kopplers 3 sowohl an einem Takteingang 381 der Uhr 380 mit Regelschleife als auch oder wahlweise an einem Eingang 371 einer ungeregelten Uhr 370 an. Beide Uhren 380 und 370 sind nur als Funktion beispielhaft dargestellt und können durch denselben Schaltkreis erzeugt werden. Die ungeregelte Uhr 370 läuft exakt mit dem Taktgeber 300 getaktet und kann verwendet werden, wenn keine Aufsynchronisation auf die Uhr 480 der SPS 4 erforderlich ist. Ebenfalls basierend auf dem Taktsignal CLK_{M} des Taktgebers 300 des Kopplers 3 ist die Sende-Empfangs-Schaltung 340 des Kopplers 3 zur Kommunikation über den Lokalbus 7 getaktet. Datenpakete, z.B. das Synchronisationstelegramm 70, werden mit exakt dem Taktsignal CLK_{M} getaktet ausgegeben.

Dabei wird ausgenutzt, dass im Physical Layer PHY eine Synchronisationseinheit 121 eines ersten Teilnehmers 1 eingesetzt wird. Der Koppler 3 ist beispielsweise als Master des Lokalbusses 7 und der erste Teilnehmer 1 und ein zweiter Teilnehmer 2 sind beispielsweise als Slave des Lokalbusses 7 ausgebildet. Die Erfindung ist jedoch nicht auf Master-Slave-Bussysteme begrenzt, so kann die Erfindung alternativ für ein Mehrfachzugriff (engl. - Carrier Sense Multiple Access - CSMA) oder eine Punkt-zu-Punkt-Verbindung angewandt werden. Die Synchronisationseinheit 121 kann auch als CDR (engl. Clock- and Data-Recovery) bezeichnet werden. Die Synchronisationseinheit 121 des ersten Teilnehmers 1 ist zur Detektion von Transitionen im empfangenen seriellen Empfangs-Datenstrom eingerichtet. Der Empfangs-Datenstrom ist durch die Empfangsschaltung 120 des ersten Teilnehmers 1 von der Sende-Empfangs-Schaltung 340 des Kopplers 3 empfangbar. Die Synchronisationseinheit 121 ist zur Regelung der Taktgeberfrequenz des internen Taktgebers 100 des ersten Teilnehmers 1 in Abhängigkeit von den im Empfangs-Datenstrom detektierten Transitionen eingerichtet.

Der interne Taktgeber 100 des ersten Teilnehmers 1 ist zur Ausgabe eines vom Taktgebersignal abgeleiteten ersten Taktsignals CLK₁ an einen Uhrenschaltkreis 180 eingerichtet. Eine erste Taktfrequenz des ersten Taktsignals CLK₁ ist durch die Regelung der Synchronisationseinheit 121 gleich der im seriellen Empfangs-Datenstrom enthaltenen Datentaktfrequenz und somit gleich der Frequenz des Taktsignals CLK_{M} des Taktgebers 300 des Kopplers 3. Das Taktsignal CLK_{M} des Taktgebers 300 des Kopplers 3 kann auch als Master-Taktsignal CLK_{M} bezeichnet werden. Entsprechend werden die Uhren 370, 380, 180, 280 im Lokalbussystem mit Taktsignalen CLK_{M}, CLK₁ mit gleicher Taktfrequenz getaktet, wobei die Taktfrequenzen nur bis zum Einrasten der Regelung durch die Synchronisationseinheit 121 auf der PHY-Ebene lediglich geringfügig voneinander abweichen. Vorzugweise weichen die Taktfrequenzen bis zum Einrasten der Regelung durch die Synchronisationseinheit 121 auf der PHY-Ebene um maximal +/- 100 bis 200 ppm voneinander ab. Für die Regelschleife der Synchronisationseinheit 121 im Physical Layer PHY ist die Abtastrate des Reglers um mehrere Zehnerpotenzen höher als die Abtastrate für die Regelung in der Uhr 380. Einschwingvorgänge der Regelung durch die Synchronisationseinheit 121 im Physical Layer PHY sind daher in einem Bruchteil der Zeit abgeschlossen, welche für den Einschwingvorgang der Regelschleife der Uhr 380 des Kopplers 3 mit dem PI-Regler 384 erforderlich ist.

Wird das durch die Synchronisationseinheit 121 mittels CDR synchronisierte Taktsignal CLK_{M} und CLK₁ zum Betrieb der übergeordneten Uhr 380, 370 des Kopplers 3 und untergeordneter Uhren 180, 280 der Teilnehmer 100, 200 benutzt, dann ist der Drift-Fehler gleich Null. Für die Synchronisation des Offset-Fehlers genügt dann ein einfacher P-Regler in der lokalen Uhr 180, 280. Der P-Regler kann komplett entfallen, wenn, wie im Ausführungsbeispiel der Figur 3 die Nachricht 70 im Lokalbus 7 deterministisch und vorteilhafterweise ohne Jitter übertragen werden kann. Dabei bedeutet deterministisch, dass jede Nachricht 70, die über den Lokalbus 7 übertragen wird, eine feste, unveränderliche Anzahl von Takten - beispielweise 16,5 Takte - oder ein fester, unveränderlicher Zeitraum - beispielweise 33 µs - zur Übertragung vom Koppler 3 zum ersten Teilnehmer 1 benötigt (Laufzeit). Ebenfalls ist die Übertragung vom ersten Teilnehmer 1 zum zweiten Teilnehmer 2 und ggf. zu jedem weiteren Teilnehmer (nicht dargestellt) des Busses 7 deterministisch. Im Fall der deterministischen Übertragung ist die Uhr 180 des ersten Teilnehmers 1 eingerichtet, seine Uhrzeit t_{S1} auf den in der Nachricht 70 enthalten Zeitwert TS_{LB1} oder einen hiervon abgeleiteten Zeitwert zu setzen.

Auf den in der Nachricht 70 enthaltenen Zeitwert TS_{LB1} kann noch ein Offset aufaddiert werden, um z.B. die Laufzeit der Nachricht 70 über den Physical Layer PHY zu kompensieren. Beispielsweise basiert der Zeitwert TS_{LB1} auf der Uhrzeit t_{SM} des Kopplers 3 und der Laufzeit, der für die Übertragung der Nachricht 70 benötigt wird. Alternativ wird der abgeleitete Zeitwert basierend auf dem übertragenen Zeitwert TS_{LB1} und einer dem ersten Teilnehmer 1 bekannten Laufzeit, die für die Übertragung der Nachricht 70 benötigt wird, berechnet. Der erste Teilnehmer 1 weist eine Verarbeitungsschaltung 130 zur parallelen Datenverarbeitung auf, wobei die Verarbeitungsschaltung 130 eingerichtet ist, den Zeitwert TS_{LB1} aus der Nachricht 70 auszulesen und an die Uhr 180 weiterzuleiten. Weiterhin ist die Verarbeitungsschaltung 130 eingerichtet, den Zeitwert TS_{LB1} ggf. in einen anderen Zeitwert TS_{LB2} zu ändern, der an die Uhr 280 des nachfolgenden zweiten Teilnehmers 2 mittels der Sendeschaltung 140 über den Bus 7 übertragen wird.

Durch das Ausführungsbeispiel der Figur 3 wird der Vorteil erzielt, dass eine der Uhrzeiten t_{M} oder t_{SM} des Kopplers 3 mit Uhrzeiten t_{S1}, t_{S2} der Teilnehmer 1, 2 nahezu perfekt synchronisiert ist. Somit gehen die Uhren 180, 280 der Teilnehmer 1, 2 und die genutzte Master-Uhr 370 oder 380 des Kopplers 3 untereinander nicht auseinander, weisen also keine Drift auf, die ausgeregelt werden müsste. Im Ausführungsbeispiel der Figur 3 weisen beide Teilnehmer 1 und 2 jeweils eine Recheneinheit 190 und 290 - beispielweise einen Mikrocontroller - und beide Teilnehmer 1 und 2 jeweils eine Schnittstelle 150, 250 - beispielweise Kabelanschlusskontakte - zum externen Anschluss eines Aktors 512, 522 und/oder Sensors 511, 521 oder dergleichen auf. Die Uhren 180, 280 der Teilnehmer 1, 2 können auch als Software in der Recheneinheit 190, 290 des jeweiligen Teilnehmers 1, 2 implementiert sein. Durch die nahezu perfekte Synchronisation der Uhren 180 und 280 des ersten Teilnehmers 1 respektive des zweiten Teilnehmers 2 können zum exakt gleichen Zeitpunkt die Sensorwerte der Sensoren 511, 512 erfasst werden und/oder zum exakt gleichen Zeitpunkt die Aktoren 512, 522 innerhalb der Teilnehmer 1, 2 des Busses 7 angesteuert werden.

In Figur 3a ist eine Nachricht 70 zur Übertragung über den Bus 7 schematisch dargestellt. Die Nachricht 70 weist einen Kopf H, ein Zeitinkrement TV (z.B. 28 Bit) einen Zeitwert TS_{LB1} (z.B. 64 Bit) und einen Prüfwert CRC auf. Das Zeitinkrement TV definiert die Geschwindigkeit der übergeordneten Uhr 380 des Kopplers 3. Dadurch wird erreicht, dass die untergeordneten Uhren 180, 280 der Teilnehmer 1, 2 das gleiche Zeitinkrement verwenden und immer parallel zur übergeordneten Uhr 380 des Kopplers 3 laufen. Auf diese Weise kann die übergeordnete Uhr 380 des Kopplers 3 mit dem PI-Regler 384 auf die ihr übergeordnete Uhr 480 der über den Feldbus 6 verbundenen Steuereinheit 4 (SPS) mittels der Regelschleife des Kopplers 3 synchronisiert werden und alle untergeordneten Uhren 180, 280 folgen ihr und damit der Synchronisation der Uhr 380 des Kopplers 3, ohne dass eine zusätzliche Synchronisation der Teilnehmer 1, 2 außerhalb des Physical-Layers PHY erforderlich wäre. Eine Regelschleife innerhalb der Uhr 180, 280 eines Teilnehmers 1, 2 d.h. außerhalb des Physical Layers PHY kann komplett entfallen, die Teilnehmer 1, 2 folgen der Uhr des Kopplers 3, sklavisch, nahezu verzögerungsfrei. Die Implementierung eines verteilten Uhrsystems wird dadurch stark vereinfacht. Der Bedarf an Logik- und Software-Ressourcen ist im Ausführungsbeispiel der Figur 3 gegenüber herkömmlichen Lösungen signifikant reduziert.

Die Teilnehmer 1, 2 des Busses 7 sind aufgrund der schnellen Uhrsynchronisation praktisch nach dem Hochfahren betriebsbereit. Bereits mit der ersten Nachricht 70 wird die vollständige Uhr-Synchronisation der Teilnehmer 1, 2 erzielt, selbst bereits dann, wenn sich die Uhr 380 des Kopplers 3 noch in der Synchronisierungsphase vor dem Einrasten befindet. Der Koppler 3 ist eingerichtet, eine erneute Nachricht 70 dann zu senden, wenn der Koppler 3 ermittelt, dass ein neuer Teilnehmer X (nicht dargestellt) hinzugekommen ist, oder wenn ein vorhandener Teilnehmer 1, 2 einen hardware-Reset durchläuft oder wenn die Uhr 380 des Kopplers 3 unstetig durch Setzen auf eine ganz neue Uhrzeit t_{SPS} der SPS 4 zu synchronisieren ist oder, wenn der PI-Regler 384 einen neuen Geschwindigkeitswert TV berechnet hat.

Im Ausführungsbeispiel der Figur 3 ist der Restfehler zwischen den Uhrzeiten t_{SM} des Kopplers 3 und den Uhrzeiten t_{S1}, t_{S2} der Teilnehmer 1, 2 kleiner als ein Fehler welcher mit einem separaten PI-Regler in jedem Teilnehmer 1, 2 erreicht werden könnte. Der größte Anteil dieses sehr kleinen Restfehlers hat seine Ursache in den (ggf. nicht ganz exakt bekannten) Laufzeiten auf dem Bus 7 und dem Vermessen und Kompensieren dieser Laufzeiten auf dem Bus 7. Hingegen tragen weder Rauschen noch Ausreißer zu dem Restfehler bei.

Im Ausführungsbeispiel der Figur 3 ist zudem die Lösung dargestellt, das eine Uhr 370 des Kopplers 3 nicht auf eine übergeordnete Uhr synchronisiert werden muss und entsprechend durch den Taktgeber 300 des Kopplers 3, beispielweise mittels eines Quarzoszillators exakt getaktet ist. In diesem Fall kann die Übertragung des Zeitinkrements TV entfallen, da dieses bei allen Teilnehmern 1, 2, 3 des Busses 7 ohnehin gleicht ist. Ebenfalls ist es möglich das Zeitinkrement TV nur ein einziges Mal zu übertragen, da dieses nachfolgend konstant ist. In diesem Fall muss die Nachricht 70 auch nicht zyklisch übertragen werden.

Beispielsweise ist eine ereignisabhängige Übertragung, z.B. beim Hinzufügen eines neuen Teilnehmers, ausreichend. Durch eine Selektionsschaltung 390 - beispielweise einem Multiplexer - im Ausführungsbeispiel der Figur 3 können beide Uhren 370, 380 alternativ ausgewählt werden.

### Bezugszeichenliste

- 1, 2: Teilnehmer, Slave
- 3: Kopfstation, Koppler, Master
- 4: Steuervorrichtung, Leitstation, SPS
- 6: übergeordneter Bus, Feldbus
- 7: Datennetz, Bus, lokaler Bus, untergeordneter Bus
- 60, 70: Nachricht, Synchronisations-Telegramm
- 100: Taktgeber
- 120: Empfangsschaltung
- 121: Synchronisationseinheit
- 122: Seriell-Parallel-Wandler
- 123: Dekodierer
- 124: Descrambler
- 129: Eingangsschaltung
- 130: Verarbeitungsschaltung
- 131: Speicher
- 132: digitale Logik
- 133: Manipulationsschaltung
- 131a, 131b,131c: Speicherbereich
- 140: Sendeschaltung
- 142: Parallel-Seriell-Wandler
- 143: Kodierer
- 144: Scrambler
- 149: Ausgangsschaltung
- 150, 250: I/O - Schnittstelle
- 180, 280: Uhrenschaltkreis, Uhr
- 190, 290: Recheneinheit, Prozessor, Mikrocontroller
- 300: Taktgenerator
- 320: Transceiver, Sende-Empfangs-Schaltung
- 340: Transceiver, Sende-Empfangs-Schaltung
- 370: Uhrenschaltkreis, Uhr
- 371, 381: Takteingang
- 380: Uhr
- 382: Halteschaltung
- 383: Differenzglied
- 384: PI-Regler
- 385: Uhrenschaltung
- 390: Selektionsschaltung, Multiplexer
- 400: Taktgeber
- 480: Uhr
- 511, 521: Sensor
- 512, 522: Aktor

- CLK1, CLK2: Taktsignal
- CLK_{M}: Taktsignal
- CRC: Prüfwert
- D_{SR}: serielle Empfangsdaten
- D_{ST}: serielle Sendedaten
- S_{TG}: Taktgebersignal
- f1, f2: Taktfrequenz
- f_{TG}: Taktgeberfrequenz
- f_{SR}: Datentaktfrequenz
- H: Kopf
- IL: Instruktionsliste
- I1, I2, I3, I4, I5: Instruktion
- PHY: Physical Layer
- S_{SR}: Empfangs-Datenstrom
- S_{ST}: Sende-Datenstrom
- TR: Transition, Signalflanke
- TV: Zeitinkrement
- TS_{LB1}, TS_{LB2}, TS_{FB}: Zeitwert, Zeitstempel
- t: Zeit
- T_{SPS}, t_{M}, t_{SM}, t_{S1}, t_{S2}: Uhrzeit
- T_{SR}: Periode
- D_{PR}, D_{PR}', D_{PR}": parallele Empfangsdaten
- D_{PT}, D_{PT}', D_{PT}": parallele Sendedaten

## Patentansprüche

1. System mit einer Kopfstation (3) und zumindest einem über einen drahtgebundenen
Lokalbus (7) mit der Kopfstation (3) verbundenen Teilnehmer (1),
- bei dem die Kopfstation (3) eine feldbusseitige Sende-Empfangs-Schaltung (320) zur Kommunikation über einen Feldbus (6) aufweist,
- bei dem die Kopfstation (3) eine lokalbusseitige Sende-Empfangsschaltung (340) zur Kommunikation über den Lokalbus (7) aufweist,
- bei dem die Kopfstation (3) eine Uhr (380) mit einer Regelschleife zur Uhrensynchronisation auf eine über den Feldbus (7) verbundene übergeordnete Uhr (480) aufweist,
- bei dem die Kopfstation (3) einen Taktgeber (300) zur Erzeugung eines Taktsignals (CLK_{M}) aufweist, welches über einen Takteingang (381) an der Uhr (380) anliegt, und über welches die lokalbusseitige Sende-Empfangsschaltung (340) getaktet ist, so dass Nachrichten (70) von der Sende-Empfangsschaltung (340) exakt mit dem Taktsignal (CLK_{M}) getaktet ausgegeben wird,
bei dem der Teilnehmer (1)
- einen internen zweiten Taktgeber (100) zur Erzeugung eines Taktgebersignals (S_{TG}) mit einer Taktgeberfrequenz (f_{TG}) für den Teilnehmer (1) aufweist,
- eine Empfangsschaltung (120) zum Empfang eines seriellen Empfangs-Datenstroms (S_{SR}) aufweist,
- eine Verarbeitungsschaltung (130) zur Eingabe von parallelen Empfangsdaten (D_{PR}) und zur Ausgabe von parallelen Sendedaten (D_{PT}) aufweist, und
- eine Sendeschaltung (140) zum Senden eines seriellen Sende-Datenstroms (S_{ST}) aufweist,
- einen Uhrenschaltkreis (180) zur Ausgabe einer Uhrzeit (t_{S1}) aufweist,
bei dem
- die Empfangsschaltung (120) des Teilnehmers (1) einen Seriell-Parallel-Wandler (122) zum Wandeln von seriellen Empfangsdaten (D_{SR}) des seriellen Empfangs-Datenstroms (S_{SR}) in die parallelen Empfangsdaten (D_{PR}) aufweist,
- die Empfangsschaltung (120) des Teilnehmers (1) eine Synchronisationseinheit (121) zur Synchronisation des internen Taktgebers (100) auf die im seriellen Empfangs-Datenstrom (S_{SR}) enthaltene Datentaktfrequenz (f_{SR}) aufweist,
- die Synchronisationseinheit (121) des Teilnehmers (1) zur Detektion von Transitionen (TR) im empfangenen seriellen Empfangs-Datenstrom (S_{SR}) und zur Regelung der Taktgeberfrequenz (f_{TG}) des internen Taktgebers (100) in Abhängigkeit von den detektierten Transitionen (TR) eingerichtet ist,
- die Sendeschaltung (140) des Teilnehmers (1) einen Parallel-Seriell-Wandler (142) zum Wandeln der parallelen Sendedaten (D_{PT}) in serielle Sendedaten (D_{ST}) des Sende-Datenstroms (S_{ST}) aufweist,
- der interne Taktgeber (100) des Teilnehmers (1) zur Ausgabe eines vom Taktgebersignal (S_{TG}) abgeleiteten ersten Taktsignals (CLK₁) an die Sendeschaltung (140) eingerichtet ist, so dass das Wandeln der parallelen Sendedaten (D_{PT}) in serielle Sendedaten (D_{ST}) für den seriellen Sende-Datenstrom (S_{ST}) durch das erste Taktsignal (CLK₁) getaktet ist,
- eine erste Taktfrequenz (f₁) des ersten Taktsignals (CLK₁) durch die Regelung gleich der im seriellen Empfangs-Datenstrom (S_{SR}) enthaltenen Datentaktfrequenz (f_{SR}) ist,
- das erste Taktsignal (CLK₁) zum Betrieb des Uhrenschaltkreis (180) benutzt wird,
- der Taktgeber (100) des Teilnehmers (1) zur Ausgabe eines vom Taktgebersignal (S_{TG}) abgeleiteten zweiten Taktsignals (CLK₂) an die Verarbeitungsschaltung (130) eingerichtet ist, so dass eine Verarbeitung der parallelen Empfangsdaten (D_{PR}) und/oder der parallelen Sendedaten (D_{PT}) durch das zweite Taktsignal (CLK₂) getaktet ist, und
- jede Nachricht (70) im Lokalbus (7) deterministisch mit einer festen, unveränderlichen Anzahl von Takten oder einem festen, unveränderlichen Zeitraum übertragen wird, und der Uhrenschaltkreis (180) des Teilnehmers (1) eingerichtet ist, seine Uhrzeit (t_{S1}) auf einen in der Nachricht (70) enthaltenen Zeitwert (TS_{LB1}) oder einen hiervon abgeleiteten Zeitwert zu setzen.

2. System nach Anspruch 1, bei dem
die Verarbeitungsschaltung (130) für die Verarbeitung eingerichtet ist,
die parallelen Empfangsdaten (D_{PR}) weiterzuleiten, um die parallelen Sendedaten (D_{PT}) basierend auf den parallelen Empfangsdaten (D_{PR}) an die Sendeschaltung (140) insbesondere nach einer vorgegebenen Anzahl von Takten des zweiten Taktsignals (CLK₂) auszugeben.

3. System nach Anspruch 2, bei dem
die Verarbeitungsschaltung (130) für die Verarbeitung zusätzlich eingerichtet ist,
- die parallelen Empfangsdaten (D_{PR}) zumindest teilweise in einem Speicherbereich (131a) für eine Auswertung zu speichern; und/oder
- die parallelen Sendedaten (D_{PT}) zumindest teilweise aus einem Speicherbereich (131b) auszulesen, um die ausgelesenen parallelen Sendedaten (D_{PT}) an die Sendeschaltung (140) auszugeben; und/oder
- eine Anzahl von Bitwerten der parallelen Empfangsdaten (D_{PR}) zu ändern, um die parallelen Empfangsdaten (D_{PR}) mit der Änderung als parallele Sendedaten (D_{PT}) an die Sendeschaltung (140) auszugeben.

4. System nach einem der vorhergehenden Ansprüche, bei dem
der Taktgeber (100) eingerichtet ist, das zweite Taktsignal (CLK₂) mit einer zweiten Taktfrequenz (f₂) auszugeben, wobei die zweite Taktfrequenz (f₂) durch die Regelung gleich oder ein ganzzahliges Vielfaches der im seriellen Empfangs-Datenstrom (S_{SR}) enthaltenen Datentaktfrequenz (f_{SR}) ist.

5. System nach einem der vorhergehenden Ansprüche, bei dem
die Taktgeberfrequenz (f_{TG}) des Taktgebers (100) durch die Regelung gleich oder ein ganzzahliger Bruchteil oder ein ganzzahliges Vielfaches der im seriellen Empfangs-Datenstrom (S_{SR}) enthaltenen Datentaktfrequenz (f_{SR}) ist.

6. System nach einem der vorhergehenden Ansprüche, bei dem
- die Verarbeitungsschaltung (130) einen Speicherbereich (131c) für eine Instruktionsliste (IL) aufweist,
- die Verarbeitungsschaltung (130) eingerichtet ist, die Verarbeitung basierend auf in der Instruktionsliste (IL) enthaltene Instruktionen (I1, I2, I3, I4, I5) auszuführen, und
- die Verarbeitungsschaltung (130) eingerichtet ist, ein Auslesen der Instruktionen (I1, I2, I3, I4, I5) aus der Instruktionsliste (IL) mittels des zweiten Taktsignals (CLK₂) zu takten.

7. System nach einem der vorhergehenden Ansprüche, bei dem
- der Taktgeber (100) einen Quarzoszillator (101) mit über Spannung trimmbarer Taktgeberfrequenz (f_{TG}) aufweist, und
- der Quarzoszillator (101) Bestandteil einer Phasenregelschleife (PLL) ist.

8. System nach einem der vorhergehenden Ansprüche, bei dem
- die Taktgeberfrequenz (f_{TG}) des Taktgebers (100) nur innerhalb eines Bereichs von kleiner 1% der Taktgeberfrequenz (f_{TG}) einstellbar ist.

9. System nach einem der vorhergehenden Ansprüche, bei dem
- die Empfangsschaltung (120) einen Dekodierer (123) zum Dekodieren der parallelen Empfangsdaten (D_{PR}") aufweist, wobei der Dekodierer (123) durch das erste Taktsignal (CLK₁) getaktet ist, und/oder
- die Sendeschaltung (140) einen Kodierer (143) zum Kodieren der parallelen Sendedaten (D_{PT}") aufweist, wobei der Kodierer (143) durch das erste Taktsignal (CLK₁) getaktet ist.

10. System nach einem der vorhergehenden Ansprüche, bei dem
- die Empfangsschaltung (120) einen Descrambler (124) zum Descrambeln der parallelen Empfangsdaten (D_{PR}') aufweist, wobei der Descrambler (124) durch das erste Taktsignal (CLK₁) getaktet ist, und/oder
- die Sendeschaltung (140) einen Scrambler (144) zum Scrambeln der parallelen Sendedaten (D_{PT}) aufweist, wobei der Scrambler (144) durch das erste Taktsignal (CLK₁) getaktet ist.

11. System nach einem der vorhergehenden Ansprüche, bei dem
- die Verarbeitungsschaltung (130) eingerichtet ist, nach einer vorgegebenen Anzahl von Takten des zweiten Taktsignals (CLK₂) nach Eingabe der parallelen Empfangsdaten (D_{PR}) die parallelen Sendedaten (D_{PT}) auszugeben.

12. System nach einem der vorhergehenden Ansprüche, bei dem die Verarbeitungsschaltung (130) zur Synchronisation der Uhrzeit (t_{S1}) eingerichtet ist, indem
- die Verarbeitungsschaltung (130) eingerichtet ist, den Zeitwert (TS_{LB1}) aus den parallelen Empfangsdaten (D_{PR}) auszuwerten und basierend auf dem Zeitwert (TS_{LB1}) die Uhrzeit (t_{S1}) des Uhrenschaltkreises (180) einzustellen.

13. System nach einem der vorhergehenden Ansprüche, bei dem
- die Verarbeitungsschaltung (130) eingerichtet ist, ein Zeitinkrementwert (TV) aus den parallelen Empfangsdaten (D_{PR}) auszuwerten und basierend auf dem Zeitinkrementwert (TV) ein Uhrzeitinkrement des Uhrenschaltkreises (180) einzustellen.

14. System nach einem der vorhergehenden Ansprüche, bei dem
- die Verarbeitungsschaltung (130) eingerichtet ist, einen aktuellen Zeitwert (TS_{LB2}) und/oder einen aktuellen Zeitinkrementwert (TV) aus dem Uhrenschaltkreis (180) zu bestimmen und in die parallelen Sendedaten (D_{PT}) zu schreiben.

## Claims

1. System having a head-end station (3) and at least one subscriber (1) connected to the head-end station (3) via a wired local bus (7),
- in which the head-end station (3) has a field-bus-side transmitting/receiving circuit (320) for communication via a field bus (6),
- in which the head-end station (3) has a local-bus-side transmitting/receiving circuit (340) for communication via the local bus (7),
- in which the head-end station (3) has a clock (380) with a control loop for clock synchronization with a higher-level clock (480) connected via the field bus (7),
- in which the head-end station (3) has a clock generator (300) for generating a clock signal (CLK_{M}) which is applied to the clock (380) via a clock input (381) and is used to clock the local-bus-side transmitting/receiving circuit (340), with the result that messages (70) from the transmitting/receiving circuit (340) are output in a manner exactly clocked with the clock signal (CLK_{M}),
in which the subscriber (1)
- has an internal second clock generator (100) for generating a clock generator signal (S_{TG}) at a clock generator frequency (f_{TG}) for the subscriber (1),
- has a receiving circuit (120) for receiving a serial receive data stream (S_{SR}),
- has a processing circuit (130) for inputting parallel receive data (D_{PR}) and for outputting parallel transmit data (D_{PT}), and
- has a transmitting circuit (140) for transmitting a serial transmit data stream (S_{ST}),
- has a clock circuit (180) for outputting a time (t_{S1}), in which
- the receiving circuit (120) of the subscriber (1) has a serial-parallel converter (122) for converting serial receive data (D_{SR}) of the serial receive data stream (S_{SR}) into the parallel receive data (D_{PR}),
- the receiving circuit (120) of the subscriber (1) has a synchronization unit (121) for synchronizing the internal clock generator (100) with the data clock frequency (f_{SR}) contained in the serial receive data stream (S_{SR}),
- the synchronization unit (121) of the subscriber (1) is configured to detect transitions (TR.) in the received serial receive data stream (S_{SR}) and to control the clock generator frequency (f_{TG}) of the internal clock generator (100) on the basis of the detected transitions (TR),
- the transmitting circuit (140) of the subscriber (1) has a parallel-serial converter (142) for converting the parallel transmit data (D_{PT}) into serial transmit data (D_{ST}) of the transmit data stream (S_{ST}),
- the internal clock generator (100) of the subscriber (1) is configured to output a first clock signal (CLK₁) derived from the clock generator signal (S_{TG}) to the transmitting circuit (140), such that the conversion of the parallel transmit data (D_{PT}) into serial transmit data (D_{ST}) for the serial transmit data stream (S_{ST}) is clocked by means of the first clock signal (CLK₁),
- a first clock frequency (f₁) of the first clock signal (CLK₁) is equal to the data clock frequency (f_{SR}) contained in the serial receive data stream (S_{SR}) as a result of the control,
- the first clock signal (CLK₁) is used to operate the clock circuit (180),
- the clock generator (100) of the subscriber (1) is configured to output a second clock signal (CLK₂) derived from the clock generator signal (S_{TG}) to the processing circuit (130), such that processing of the parallel receive data (D_{PR}) and/or the parallel transmit data (D_{PT}) is clocked by means of the second clock signal (CLK₂), and
- each message (70) on the local bus (7) is transmitted deterministically with a fixed, invariable number of clock pulses or a fixed, invariable period of time, and the clock circuit (180) of the subscriber (1) is configured to set its time (t_{S1}) to a time value (TS_{LB1}) contained in the message (70) or a time value derived therefrom.

2. System according to Claim 1, in which
for the processing, the processing circuit (130) is configured
to forward the parallel receive data (D_{PR}) in order to output the parallel transmit data (D_{PT}) based on the parallel receive data (D_{PR}) to the transmitting circuit (140), in particular after a predefined number of clock pulses of the second clock signal (CLK₂).

3. System according to Claim 2, in which
for the processing, the processing circuit (130) is additionally configured
- to store the parallel receive data (D_{PR}) at least partially in a memory area (131a) for an evaluation; and/or
- to read the parallel transmit data (D_{PT}) at least partially from a memory area (131b) in order to output the read parallel transmit data (D_{PT}) to the transmitting circuit (140); and/or
- to change a number of bit values of the parallel receive data (D_{PR}) in order to output the parallel receive data (D_{PR}) with the change as parallel transmit data (D_{PT}) to the transmitting circuit (140).

4. System according to one of the preceding claims, in which
the clock generator (100) is configured to output the second clock signal (CLK₂) at a second clock frequency (f₂), wherein the second clock frequency (f₂) is equal to or is an integer multiple of the data clock frequency (f_{SR}) contained in the serial receive data stream (S_{SR}) as a result of the control.

5. System according to one of the preceding claims, in which
the clock generator frequency (f_{TG}) of the clock generator (100) is equal to or is an integer fraction or an integer multiple of the data clock frequency (f_{SR}) contained in the serial receive data stream (S_{SR}) as a result of the control.

6. System according to one of the preceding claims, in which
- the processing circuit (130) has a memory area (131c) for an instruction list (IL),
- the processing circuit (130) is configured to perform the processing based on instructions (I1, I2, I3, I4, I5) contained in the instruction list (IL), and
- the processing circuit (130) is configured to clock reading of the instructions (I1, I2, I3, I4, I5) from the instruction list (IL) using the second clock signal (CLK₂).

7. System according to one of the preceding claims, in which
- the clock generator (100) has a crystal oscillator (101) with a clock generator frequency (f_{TG}) that can be trimmed using voltage, and
- the crystal oscillator (101) is part of a phase locked loop (PLL).

8. System according to one of the preceding claims, in which
- the clock generator frequency (f_{TG}) of the clock generator (100) can be set only within a range of less than 1% of the clock generator frequency (f_{TG}).

9. System according to one of the preceding claims, in which
- the receiving circuit (120) has a decoder (123) for decoding the parallel receive data (D_{PR}"), wherein the decoder (123) is clocked by means of the first clock signal (CLK₁), and/or
- the transmitting circuit (140) has a coder (143) for coding the parallel transmit data (D_{PT}"), wherein the coder (143) is clocked by means of the first clock signal (CLK₁).

10. System according to one of the preceding claims, in which
- the receiving circuit (120) has a descrambler (124) for descrambling the parallel receive data (D_{PR}'), wherein the descrambler (124) is clocked by means of the first clock signal (CLK₁), and/or
- the transmitting circuit (140) has a scrambler (144) for scrambling the parallel transmit data (D_{PT}), wherein the scrambler (144) is clocked by means of the first clock signal (CLK₁).

11. System according to one of the preceding claims, in which
- the processing circuit (130) is configured to output the parallel transmit data (D_{PT}) after a predefined number of clock pulses of the second clock signal (CLK₂) after input of the parallel receive data (D_{PR}).

12. System according to one of the preceding claims, in which the processing circuit (130) is configured to synchronize the time (t_{S1}) by
- the processing circuit (130) being configured to evaluate the time value (TS_{LB1}) from the parallel receive data (D_{PR}) and to set the time (t_{S1}) of the clock circuit (180) based on the time value (TS_{LB1}).

13. System according to one of the preceding claims, in which
- the processing circuit (130) is configured to evaluate a time increment value (TV) from the parallel receive data (D_{PR}) and to set a time increment of the clock circuit (180) based on the time increment value (TV).

14. System according to one of the preceding claims, in which
- the processing circuit (130) is configured to determine a current time value (TS_{LB2}) and/or a current time increment value (TV) from the clock circuit (180) and to write it/them to the parallel transmit data (D_{PT}).

## Revendications

1. Système comprenant une station de tête (3) et au moins un nœud (1) relié à la station de tête (3) par le biais d'un bus local filaire (7),
- avec lequel la station de tête (3) possède un circuit d'émission-réception (320) côté bus de terrain pour la communication par le biais d'un bus de terrain (6),
- avec lequel la station de tête (3) possède un circuit d'émission-réception (340) côté bus local pour la communication par le biais du bus local (7),
- avec lequel la station de tête (3) possède une horloge (380) comprenant une boucle de régulation destinée à la synchronisation de l'horloge sur une horloge de niveau supérieur (480) connectée par le biais du bus de terrain (7),
- avec lequel la station de tête (3) possède une horloge interne (300) destinée à générer un signal d'horloge (CLK_{M}), lequel est appliqué à l'horloge (380) par le biais d'une entrée d'horloge (381), et par le biais duquel le circuit d'émission-réception (340) côté bus local est cadencé, de sorte que des messages (70) sont délivrés par le circuit d'émission-réception (340) de manière exactement cadencée avec le signal d'horloge (CLK_{M}),
avec lequel le nœud (1)
- possède une deuxième horloge interne (100) destinée à générer un signal d'horloge interne (S_{TG}) ayant une fréquence d'horloge interne (f_{TG}) pour le nœud (1),
- possède un circuit de réception (120) destiné à recevoir un flux de données de réception série (S_{SR}),
- possède un circuit de traitement (130) servant à l'entrée de données de réception parallèle (D_{PR}) et à la délivrance de données d'émission parallèle (D_{PT}), et
- possède un circuit d'émission (140) destiné à émettre un flux de données d'émission série (S_{ST}),
- possédant un circuit d'horloge (180) destiné à délivrer une heure (t_{S1}), avec lequel
- le circuit de réception (120) de l'abonné (1) possède un convertisseur série-parallèle (122) destiné à convertir des données de réception série (D_{SR}) du flux de données de réception série (S_{SR}) en les données de réception parallèle (D_{PR}),
- le circuit de réception (120) du nœud (1) possède une unité de synchronisation (121) destinée à la synchronisation de l'horloge interne (100) sur la fréquence d'horloge de données (f_{SR}) contenue dans le flux de données de réception série (S_{SR}),
- l'unité de synchronisation (121) de l'abonné (1) est conçue pour la détection de transitions (TR) dans le flux de données de réception série (S_{SR}) reçu et pour réguler la fréquence d'horloge interne (f_{TG}) de l'horloge interne (100) en fonction des transitions (TR) détectées,
- le circuit d'émission (140) de l'abonné (1) possède un convertisseur parallèle-série (142) destiné à convertir les données d'émission parallèle (D_{PT}) en données d'émission série (D_{ST}) du flux de données d'émission (S_{ST}),
- l'horloge interne (100) de l'abonné (1) est conçue pour délivrer un premier signal d'horloge (CLK₁) dérivé du signal d'horloge interne (S_{TG}) au circuit d'émission (140), de sorte que la conversion des données d'émission parallèle (D_{PT}) en données d'émission série (D_{ST}) pour le flux de données d'émission série (S_{ST}) est cadencée par le premier signal d'horloge (CLK₁),
- une première fréquence d'horloge (f₁) du premier signal d'horloge (CLK₁) est, par la régulation, égale à la fréquence d'horloge de données (f_{SR}) contenue dans le flux de données de réception série (S_{SR}),
- le premier signal d'horloge (CLK₁) est utilisé pour faire fonctionner le circuit d'horloge (180),
- l'horloge interne (100) de l'abonné (1) est conçue pour délivrer un deuxième signal d'horloge (CLK₂) dérivé du signal d'horloge interne (S_{TG}) au circuit de traitement (130), de sorte qu'un traitement des données de réception parallèle (D_{PR}) et/ou des données d'émission parallèle (D_{PT}) est cadencé par le deuxième signal d'horloge (CLK₂), et
- chaque message (70) est transmis dans le bus local (7) de manière déterministe avec un nombre fixe et invariable de cycles ou une période fixe et invariable, et le circuit d'horloge (180) de l'abonné (1) est conçu pour régler son heure (t_{S1}) à une valeur temporelle (TS_{LB1}) contenue dans le message (70) ou à une valeur temporelle qui en est dérivée.

2. Système selon la revendication 1, avec lequel
le circuit de traitement (130) pour le traitement est conçu pour
retransmettre les données de réception parallèle (D_{PR}) afin de délivrer les données d'émission parallèle (D_{PT}) au circuit d'émission (140) sur la base des données de réception parallèle (D_{PR}), notamment après un nombre prédéterminé de cycles du deuxième signal d'horloge (CLK₂).

3. Système selon la revendication 2, avec lequel
le circuit de traitement (130) pour le traitement est en plus conçu pour
- mémoriser les données de réception parallèle (D_{PR}) au moins partiellement dans une zone de mémoire (131a) pour une évaluation ; et/ou
- lire les données d'émission parallèle (D_{PT}) au moins partiellement à partir d'une zone de mémoire (131b) afin de délivrer les données d'émission parallèle (D_{PT}) lues au circuit d'émission (140) ; et/ou
- modifier un certain nombre de valeurs binaires des données de réception parallèle (D_{PR}) afin de délivrer les données de réception parallèle (D_{PR}) avec la modification en tant que données d'émission parallèle (D_{PT}) au circuit d'émission (140).

4. Système selon l'une quelconque des revendications précédentes, avec lequel
l'horloge interne (100) est conçue pour délivrer le deuxième signal d'horloge (CLK₂) avec une deuxième fréquence d'horloge (f₂), la deuxième fréquence d'horloge (f₂) étant, par la régulation, égale ou un multiple entier de la fréquence d'horloge de données (f_{SR}) contenue dans le flux de données de réception série (S_{SR}).

5. Système selon l'une quelconque des revendications précédentes, avec lequel
la fréquence d'horloge interne (f_{TG}) de l'horloge interne (100) est, par la régulation, égale à ou est une fraction entière ou un multiple entier de la fréquence d'horloge de données (f_{SR}) contenue dans le flux de données de réception série (S_{SR}).

6. Système selon l'une quelconque des revendications précédentes, avec lequel
- le circuit de traitement (130) possède une zone de mémoire (131c) pour une liste d'instructions (IL),
- le circuit de traitement (130) est conçu pour exécuter le traitement sur la base d'instructions (I1, I2, I3, I4, I5) contenues dans la liste d'instructions (IL), et
- le circuit de traitement (130) est conçu pour cadencer une lecture des instructions (I1, I2, I3, I4, 15) à partir de la liste d'instructions (IL) au moyen du deuxième signal d'horloge (CLK₂).

7. Système selon l'une quelconque des revendications précédentes, avec lequel
- l'horloge interne (100) possède un oscillateur à quartz (101) avec une fréquence d'horloge interne (f_{TG}) pouvant être ajustée par le biais d'une tension, et
- l'oscillateur à quartz (101) fait partie d'une boucle à verrouillage de phase (PLL).

8. Système selon l'une quelconque des revendications précédentes, avec lequel
- la fréquence d'horloge interne (f_{TG}) de l'horloge interne (100) ne peut être réglée qu'à l'intérieur d'une plage inférieure à 1 % de la fréquence d'horloge interne (f_{TG}).

9. Système selon l'une quelconque des revendications précédentes, avec lequel
- le circuit de réception (120) possède un décodeur (123) destiné à décoder les données de réception parallèle (D_{PR}"), le décodeur (123) étant cadencé par le premier signal d'horloge (CLK₁), et/ou
- le circuit d'émission (140) possède un codeur (143) destiné à coder les données d'émission parallèle (D_{PT}"), le codeur (143) étant cadencé par le premier signal d'horloge (CLK₁).

10. Système selon l'une quelconque des revendications précédentes, avec lequel
- le circuit de réception (120) possède un désembrouilleur (124) destiné à désembrouiller les données de réception parallèle (D_{PR}"), le désembrouilleur (124) étant cadencé par le premier signal d'horloge (CLK₁), et/ou
- le circuit d'émission (140) possède un embrouilleur (144) destiné à embrouiller les données d'émission parallèle (D_{PT}), l'embrouilleur (144) étant cadencé par le premier signal d'horloge (CLK₁).

11. Système selon l'une quelconque des revendications précédentes, avec lequel
- le circuit de traitement (130) est conçu pour délivrer les données d'émission parallèle (D_{PT}) après un nombre prédéfini de cycles du deuxième signal d'horloge (CLK₂) après l'entrée des données de réception parallèle (DPR).

12. Système selon l'une des revendications précédentes, avec lequel le circuit de traitement (130) est conçu pour synchroniser l'heure (t_{S1}) en ce que
- le circuit de traitement (130) est conçu pour évaluer la valeur temporelle (TS_{LB1}) à partir des données de réception parallèle (D_{PR}) et pour régler l'heure (t_{S1}) du circuit d'horloge (180) sur la base de la valeur temporelle (TS_{LB1}).

13. Système selon l'une quelconque des revendications précédentes, avec lequel
- le circuit de traitement (130) est conçu pour évaluer une valeur d'incrément de temps (TV) à partir des données de réception parallèle (D_{PR}) et pour régler un incrément d'heure du circuit d'horloge (180) sur la base de la valeur d'incrément de temps (TV).

14. Système selon l'une quelconque des revendications précédentes, avec lequel
- le circuit de traitement (130) est conçu pour déterminer une valeur de temps actuelle (TS_{LB2}) et/ou une valeur d'incrément de temps actuelle (TV) à partir du circuit d'horloge (180) et pour l'écrire dans les données d'émission parallèle (D_{PT}).
